# EUROPÄISCHE PATENTSCHRIFT

(11) **EP 3 191 543 B1**
(45) Veröffentlichungstag und Bekanntmachung des Hinweises auf die Patenterteilung: **07.11.2018**
(21) Anmeldenummer: 15762525.2
(22) Anmeldetag: 01.09.2015
(51) Int. Cl.: C08J 3/24, C08J 5/24

(54) **COMPOSITE-HALBZEUGE UND DARAUS HERGESTELLTE FORMTEILE SOWIE DIREKT HERGESTELLTE FORMTEILE AUF BASIS VON HYDROXYFUNKTIONALISIERTEN (METH)ACRYLATEN UND URETDIONEN, DIE DUROPLASTISCH VERNETZT WERDEN**
COMPOSITE SEMIFINISHED PRODUCTS, AND MOULDED PARTS PRODUCED FROM SAME, AND MOULDED PARTS PRODUCED DIRECTLY BASED ON HYDROXY-FUNCTIONALIZED (METH)ACRYLATES AND URETDIONES WITH DUROPLASTIC CROSS-LINKING
DEMI-PRODUITS COMPOSITES ET PIÈCES MOULÉES EN ÉTANT CONSTITUÉES AINSI QUE PIÈCES MOULÉES DIRECTEMENT FABRIQUÉES À BASE DE (MÉTH)ACRYLATES HYDROXYFONCTIONNALISÉS ET D'URETDIONS RÉTICULÉS PAR DUROPLASTIE

(30) Priorität: 08.09.2014 EP 14183881
(43) Veröffentlichungstag der Anmeldung: 19.07.2017
(73) Patentinhaber: Evonik Degussa GmbH, 45128 Essen (DE)
(72) Erfinder: KUBE, Michael, 45721 Haltern am See (DE); TUNCAY, Zuhal, 44623 Herne (DE); REEMERS, Sandra, 48151 Münster (DE); SCHMIDT, Friedrich Georg, 45721 Haltern am See (DE); SPYROU, Emmanouil, 46514 Schermbeck (DE)
(86) Internationale Anmeldenummer: PCT/EP2015/069882
(87) Internationale Veröffentlichungsnummer: WO 2016/037886

(56) Entgegenhaltungen:
- WO-A1-2012/093006
- WO-A1-2013/139704
- WO-A1-2014/139796

## Beschreibung

### Gebiet der Erfindung

Die Erfindung betrifft ein Verfahren zur Herstellung von lagerstabilen Polyurethan-Prepregs und daraus hergestellte Formkörper (Composite-Bauteile). Zur Herstellung der Prepregs bzw. Bauteile mischt man beispielsweise (Meth)acrylatmonomere, (Meth)acrylatpolymere, hydroxyfunktionalisierte (Meth)acrylatmonomere und/oder hydroxyfunktionalisierte (Meth)acrylatpolymere mit nicht (meth)acrylischen Polyolen und mit Uretdion-Materialien. Diese Mischung oder Lösung wird nach bekannten Verfahren auf Fasermaterial, wie z.B. Carbonfasern, Glasfasern oder Polymerfasern aufgebracht und thermisch, über eine Redox-Initiierung oder mit Hilfe von Strahlen oder Plasmaanwendungen polymerisiert.

Nach Polymerisation, z.B. bei Raumtemperatur oder bei bis zu 80 °C, entstehen Thermoplaste bzw. thermoplastische Prepregs, die nachträglich noch verformt werden können. Die hydroxyfunktionalisierten (Meth)Acrylatbestandteile und die Polyole können anschließend mit den bereits im System vorhandenen Uretdionen durch erhöhte Temperatur vernetzt werden. Auf diese Weise können formstabile Duroplaste bzw. vernetzte Composite-Bauteile erzeugt werden.

Faserverstärkte Materialien in Form von Prepregs werden bereits in vielen industriellen Anwendungen wegen ihrer bequemen Handhabung und der erhöhten Effizienz bei der Verarbeitung im Vergleich zu der alternativen wet-lay-up Technologie eingesetzt.

Industrielle Anwender solcher Systeme verlangen neben schnelleren Zykluszeiten und höheren Lagerstabilitäten - auch bei Raumtemperatur - zusätzlich eine Möglichkeit, die Prepregs zuzuschneiden, ohne dass bei automatisiertem Zuschnitt und Lay-up der einzelnen Prepreg-Lagen, die Schneidwerkzeuge mit der häufig klebrigen Matrixmaterial verunreinigt werden.

Verschiedene Formgebungsprozesse, wie z. B. das Reaction-Transfer-Moulding-(RTM)-Verfahren beinhalten die Einbringung der Verstärkungsfasern in eine Form, das Schließen der Form, das Einbringen der vernetzbaren Harzformulierung in die Form und die anschließende Vernetzung des Harzes, typischerweise durch Wärmezufuhr.

Eine der Beschränkungen eines solchen Prozesses ist das relativ schwierige Einlegen der Verstärkungsfasern in die Form. Die einzelnen Lagen des Gewebes oder Geleges müssen zugeschnitten und den unterschiedlichen Formgeometrien angepasst werden. Das kann sowohl zeitintensiv wie auch kompliziert sein, insbesondere wenn die Formkörper auch Schaum- oder andere Kerne enthalten sollen. Vorformbare Faserverstärkungen mit einfachem Handling und bestehenden Umformmöglichkeiten wären hier wünschenswert.

### Stand der Technik

Neben Polyestern, Vinylestern und Epoxy-Systemen gibt es eine Reihe spezialisierter Harze im Bereich der vernetzenden Matrix-Systeme. Dazu zählen auch Polyurethan-Harze, die wegen ihrer Zähigkeit, Schadenstoleranz und die Festigkeit insbesondere zur Herstellung von Composite-Profilen über Pultrusionsverfahren eingesetzt werden. Als Nachteil wird häufig die Toxizität der verwendeten Isocyanate genannt. Jedoch auch die Toxizität von Epoxy-Systemen und den dort verwendeten Härter-Komponenten ist als kritisch anzusehen. Dies gilt insbesondere für bekannte Sensibilisierungen und Allergien.

Prepregs und daraus hergestellte Composites auf der Basis von Epoxy-Systemen werden zum Beispiel beschrieben in WO 98/50211, EP 309 221, EP 297 674, WO 89/04335 und US 4,377,657. In WO 2006/043019 wird ein Verfahren zur Herstellung von Prepregs auf der Basis von Epoxidharz-Polyurethanpulvern beschrieben. Des Weiteren sind Prepregs auf der Basis von pulverförmigen Thermoplasten als Matrix bekannt.

In WO 99/64216 werden Prepregs und Composite sowie eine Methode zu deren Herstellung beschrieben, bei der Emulsionen mit so kleinen Polymerpartikeln verwendet werden, dass eine Einzelfaserumhüllung ermöglicht wird. Die Polymere der Partikel haben eine Viskosität von mindestens 5000 centipoise und sind entweder Thermoplaste oder vernetzende Polyurethan-Polymere.

In der EP 0 590 702 werden Pulverimprägnierungen zur Herstellung von Prepregs beschrieben, bei denen das Pulver aus einem Gemisch aus einem Thermoplasten und einem reaktiven Monomer bzw. Prepolymeren besteht. Die WO 2005/091715 beschreibt ebenfalls die Verwendung von Thermoplasten zur Herstellung von Prepregs.

Prepregs mit einer Matrix auf der Basis von 2-Komponenten-Polyurethanen (2-K-PUR) sind gleichfalls bekannt. Die Kategorie der 2-K-PUR umfasst im Wesentlichen die klassischen reaktiven Polyurethan-Harz-Systeme. Prinzipiell handelt es sich um ein System aus zwei getrennten Komponenten. Während der maßgebende Bestandteil der einen Komponente immer ein Polyisocyanat, wie z.B. polymere Methylendiphenyldiisocyanate (MDI) ist, sind dies bei der zweiten Komponente Polyole bzw. bei neueren Entwicklungen auch Amino- oder Amin-Polyol-Gemische. Beide Teile werden erst kurz vor der Verarbeitung miteinander vermischt. Danach erfolgt die chemische Aushärtung durch Polyaddition unter Bildung eines Netzwerkes aus Polyurethan bzw. Polyharnstoff. 2-Komponenten-Systeme haben nach dem Vermischen beider Bestandteile eine begrenzte Verarbeitungszeit (Standzeit, Potlife), da die einsetzende Reaktion zur allmählichen Viskositätserhöhung und schließlich zur Gelierung des Systems führt. Zahlreiche Einflussgrößen bestimmen dabei die effektive Zeit seiner Verarbeitbarkeit: Reaktivität der Reaktionspartner, Katalysierung, Konzentration, Löslichkeit, Feuchtegehalt, NCO/OH-Verhältnis und Umgebungstemperatur sind die wichtigsten [siehe dazu: Lackharze, Stoye/Freitag, Hauser-Verlag 1996, Seiten 210/212]. Der Nachteil der Prepregs auf der Basis derartiger 2-K-PUR-Systeme ist, dass nur eine kurze Zeit zur Verarbeitung des Prepreg zu einem Composite zur Verfügung steht. Deshalb sind derartige Prepregs nicht über mehrere Stunden geschweige denn Tage lagerstabil.

Von der unterschiedlichen Bindemittelbasis abgesehen entsprechen feuchtigkeitshärtende Lacke sowohl in ihrer Zusammensetzung als auch in ihren Eigenschaften weitgehend analogen 2K-Systemen. Es werden im Prinzip die gleichen Lösemittel, Pigmente, Füllstoffe und Hilfsmittel verwendet. Anders als 2K-Lacke tolerieren diese Systeme vor ihrer Applikation aus Stabilitätsgründen keinerlei Feuchtigkeit.

In DE 102009001793.3 und DE 102009001806.9 wird ein Verfahren zur Herstellung von lagerstabilen Prepregs, im Wesentlichen aufgebaut aus A) mindestens einem Faser förmigen Träger und B) mindestens einer reaktiven pulverförmigen Polyurethanzusammensetzung als Matrixmaterial beschrieben. Die Systeme können dabei auch Poly(meth)acrylate als Cobindemittel oder Polyolkomponente aufweisen. In DE 102010029355.5 werden solche Zusammensetzungen durch ein Direktschmelzeimprägnierverfahren in das Fasermaterial verbracht. In DE 102010030234.1 erfolgt dies durch eine Vorbehandlung mit Lösungsmitteln. Nachteil dieser Systeme ist die hohe Schmelzviskosität bzw. die Verwendung von Lösungsmitteln, die zwischenzeitlich entfernt werden müssen, bzw. auch in toxikologischer Hinsicht Nachteile mit sich bringen können.

Die internationale Patentanmeldung mit dem Anmeldeaktenzeichen PCT/EP2014/053705 offenbart die Kombination aus einem (Meth)acrylat-Reaktionsharz und einer blockierten Isocyanatkomponente. Dabei wird ein Fasermaterial mit dieser Zusammensetzung imprägniert und anschließend das Reaktionsharz mittels Strahlung ausgehärtet. Dieses Prepreg kann dann noch verformt werden, bevor die Isocyanatkomponente ausgehärtet wird. Nachteilig hat sich jedoch in diesem System erwiesen, dass die notwendige Schmelzviskosität für die Weiterverarbeitung der Prepregs bei den verlangten Vernetzungstemperaturen in der Regel sehr hoch ist. Dies hat zur Folge, dass sehr hohe Pressdrücke angesetzt werden müssen oder andernfalls die Qualität und mechanischen Eigenschaften des Composites nicht ausreichend sind.

In der EP 2 661 459 wird ein analoges System unter Aushärtung der Harzkomponente mit thermischen oder Redox-Initiatoren offenbart. Dieses System hat die gleichen Nachteile wie das in der europäischen Anmeldung PCT/EP2014/053705 beschriebene System. Zusätzlich ergibt sich durch den Aushärtemechanismus ein deutlicher Verlust an Monomeren in der Harzkomponente, was allein schon aus Gründen des Emissionsschutzes unvorteilhaft ist.

### Aufgabe

Die Aufgabe der vorliegenden Erfindung vor dem Hintergrund des Standes der Technik war es, eine neue Prepreg-Technologie zur Verfügung zu stellen, die ein einfacheres Verfahren zur Herstellung von problemlos zu handhabenden und besonders einfach herzustellenden Prepreg-Systemen ermöglicht.

Insbesondere war es Aufgabe der vorliegenden Erfindung, ein beschleunigtes Verfahren zur Herstellung von Prepregs zur Verfügung zu stellen, welches eine gegenüber dem Stand der Technik deutlich verlängerte Lagerstabilität und/oder Verarbeitungszeit (Standzeit, Potlife) ermöglicht. Zudem soll die Zusammensetzung zur Herstellung der Prepregs eine besonders einfach zu verarbeitende, d.h. niedrige Schmelzviskosität aufweisen.

Darüber hinaus bestand die Aufgabe, Formteile mit einer besonders hohen Qualität und sehr guten mechanischen Eigenschaften als Folgeprodukt dieser Prepregs zu ermöglichen. Diese sollen besonders einfach und ohne besondere Investition in die dazu benötigten Werkzeuge herstellbar und zu verarbeiten sein.

### Lösung

Gelöst werden die Aufgaben mittels eines neuartigen Verfahrens zur Herstellung von Composite-Halbzeugen und deren Weiterverarbeitung zu Formteilen, wobei eine Zusammensetzung, enthaltend mindestens eine Harzkomponente auf (Meth)acrylatbasis, mindestens ein Polyol und mindestens eine Isocyanatkomponente, in diesem Verfahren verwendet wird. Dieses neuartige Verfahren weist folgende Verfahrensschritte auf:
I. Herstellung einer reaktiven Zusammensetzung enthaltend eine Zusammensetzung, wobei diese Zusammensetzung mindestens A) eine reaktiven Harzkomponente auf (Meth)acrylatbasis, wobei mindestens ein Bestandteil der Harzkomponente Hydroxy-, Amin- und/oder Thiolgruppen aufweist, B) mindestens eine intern blockiertes und/oder mit Blockierungsmitteln blockiertes Di- oder Polyisocyanat als Isocyanatkomponente und C) eines oder mehrerer Polyole, bei denen es sich nicht um (Meth)acrylate oder Poly(meth)acrylate handelt, enthält. Verfahrensschritt I kann beispielsweise durch einfaches Zusammenrühren der drei Komponenten erfolgen.
II. direkte Imprägnierung eines faserförmigen Trägers mit der Zusammensetzung aus I.,
III. Aushärten der Harzkomponente in der Zusammensetzung mittels thermischer Initiierung, Redox-Initiierung eines 2K-Systems, elektromagnetischer Strahlung, Elektronenstrahlung oder einem Plasma,
IV. Formgebung zum späteren Formteil und
V. Aushärten der Isocyanatkomponente in der Zusammensetzung.

Bevorzugt enthält die Zusammensetzung 25 bis 85 Gew%, bevorzugt 30 bis 70 Gew%, besonders bevorzugt 40 bis 60 Gew% der Harzkomponente, 10 bis 60 Gew%, bevorzugt 15 bis 55 Gew%, besonders bevorzugt 20 bis 50 Gew% der Isocyanatkomponente und 3 Gew% bis 40 Gew%, bevorzugt 5 bis 30 Gew%, besonders bevorzugt 7 bis 20 Gew% eines oder mehrerer Polyole.

Ganz besonders bevorzugt liegen die Harzkomponente, die Polyole und die Isocyanatkomponente in einem solchen Verhältnis zueinander vor, dass auf jede Hydroxylgruppe der Harzkomponente und der Polyole 0,3 bis 1,0, bevorzugt 0,4 bis 0,9, besonders bevorzugt 0,45 bis 0,55 Uretdiongruppen - dies entspricht 0,6 bis 2,0, bevorzugt 0,8 bis 1,8 und besonders bevorzugt 0,9 bis 1,1 extern blockierte Isocyanatgruppen der Isocyanatomponente - entfallen.

Die Harzkomponente ist insbesondere mindestens zusammengesetzt aus 0 bis 30 Gew%, bevorzugt 1 bis 15 Gew% und besonders bevorzugt 2 bis 10 Gew% Vernetzer, bevorzugt Di- oder Tri(meth)acrylate, 30 bis 100 Gew%, bevorzugt 40 bis 80 Gew% und besonders bevorzugt 40 bis 60 Gew% Monomeren, bevorzugt (Meth)acrylatmonomere, 0 bis 40 Gew%, bevorzugt 5 bis 30 Gew% eines oder mehrerer Poly(meth)acrylate und 0 bis 10 Gew%, bevorzugt 0,5 bis 8 Gew% und besonders bevorzugt 3 bis 6 Gew% Photoinitiatoren, Peroxid und/oder Azoinitiator. Es handelt sich bei dem Photoinitiator bevorzugt um Hydroxyketone und/oder Bisacylphosphine. Bei den Peroxiden kann es sich beispielsweise um Dilauroylperoxid und/oder Dibenzoylperoxid handeln. Ein Beispiel für einen Azoinitiator ist AIBN.

Der Vorteil dieses erfindungsgemäßen Systems liegt in der Herstellung eines verformbaren thermoplastischen Halbzeugs/Prepregs, das bei der Herstellung der Composite-Bauteile in einem weiteren Schritt duroplastisch vernetzt wird.

Die Ausgangsformulierung ist flüssig und damit ohne Zugabe von Lösungsmitteln für die Imprägnierung von Fasermaterial geeignet. Die Halbzeuge sind lagerstabil bei Raumtemperatur. Die entstehenden Formteile verfügen über eine, im Vergleich zu anderen Polyurethansystemen, erhöhte Wärmeformbeständigkeit. Im Vergleich zu gängigen Epoxysystemen zeichnen sie sich durch eine höhere Flexibilität aus. Zudem können derartige Matrices lichtstabil ausgelegt werden und damit für die Herstellung von Sichtcarbonteilen ohne weitere Lackierung verwendet werden.

Überraschend wurde gefunden, dass ausreichend imprägnierte, reaktive und lagerstabile Composite-Halbzeuge hergestellt werden können, indem man diese mit der oben genannten Kombination aus einem (Meth)acrylatreaktionsharz, Polyolen und einer Isocyanatkomponente herstellt. Man erhält so Composite-Halbzeuge mit gegenüber dem Stand der Technik zumindest gleichen aber auch verbesserten Verarbeitungseigenschaften, die für die Herstellung leistungsfähiger Composite für verschiedenste Anwendungen im Bereich der Bau-, der Automobil-, der Luft- und Raumfahrt-Industrie, der Energietechnik (Windkraftanlagen) und im Boots- und Schiffbau eingesetzt werden können. Die erfindungsgemäß verwendbaren reaktiven Zusammensetzungen sind umweltfreundlich, kostengünstig, weisen gute mechanische Eigenschaften auf, lassen sich einfach verarbeiten und zeichnen sich nach Härtung durch eine gute Wetterbeständigkeit wie durch ein ausgewogenes Verhältnis zwischen Härte und Flexibilität aus.

Weiterhin wurde überraschend gefunden, dass sich bei dem Einsatz von 3 bis 6-fach-funktionellen Polyolen die Qualität der aus den Prepregs hergestellten Laminate und Bauteile verbessern ließ. Außerdem konnte der Druck im Presswerkzeug deutlich herabgesenkt werden, welches den Einsatz eines wesentlich kostengünstigeren Werkzeugs bzw. einer einfacheren Presse ermöglicht.
Des Weiteren wurde bei den mechanischen Eigenschaften überraschend eine Verbesserung der interlaminaren Scherfestigkeit erreicht.
Weiterhin weist ein erfindungsgemäßes Prepreg eine geringere Glasübergangstemperatur des Matrixmaterials auf. Damit wird eine bessere Flexibiltät des trockenen Halbzeugs erreicht, was wiederum die weitere Verarbeitung erleichtert. Die thermische Stabilität des vernetzten Bauteils konnte allerdings, überraschend verglichen zum Stand der Technik eines Systems ohne Polyole, erhalten bleiben.

Insbesondere wurde überraschend gefunden, dass die Mischung enthaltend die Harzkomponente und mindestens ein Polyol gegenüber dem Stand der Technik, insbesondere gegenüber Systemen die nur die Harzkomponente oder nur Polyole aufweisen, eine besonders niedrige Schmelzviskosität aufweist.

Der Begriff Composite-Halbzeuge wird im Rahmen dieser Erfindung synonym zu den Begriffen Prepreg und Organoblech verwendet. Bei einem Prepreg handelt es sich in der Regel um eine Vorstufe für duroplastische Composite-Bauteile. Bei einem Organoblech handelt es sich normalerweise um eine entsprechende Vorstufe für thermoplastische Composite-Bauteile.

In einer besonderen Ausführungsform enthält die Harzkomponente zusätzlich Urethan(meth)acrylate. In einer solche Ausführungsform ist die Harzkomponente zusammengesetzt aus 0 bis 30 Gew%, bevorzugt 1 bis 15 Gew% und besonders bevorzugt 2 bis 10 Gew% Vernetzer, 30 bis 99 Gew%, bevorzugt 40 bis 80 Gew% und besonders bevorzugt 40 bis 60 Gew% Monomeren, 0 bis 40 Gew%, bevorzugt 5 bis 30 Gew% eines oder mehrerer Präpolymere, 1 bis 20 Gew% bevorzugt 2 bis 10 Gew% und besonders bevorzugt 4 bis 8 Gew% Urethan(meth)acrylate und 0 bis 10 Gew%, bevorzugt 0,5 bis 8 Gew%, und besonders bevorzugt 3 bis 6 Gew% Photoinitiatoren, Peroxiden und/oder Azoinitiatoren.

Die Photoinitiatoren, Peroxide und/oder Azoinitiatoren sind für den Fall, dass diese zugesetzt werden, in einer Konzentration zwischen 0,2 und 10,0 Gew%, bevorzugt zwischen 0,5 und 8 Gew% und besonders bevorzugt 3 bis 6 Gew% in der Zusammensetzung enthalten.

### Träger

Das bevorzugt im erfindungsgemäßen Verfahren verwendete Trägermaterial in dem Composite-Halbzeug ist dadurch gekennzeichnet, dass die faserförmigen Träger größtenteils aus Glas, Kohlenstoff, Kunststoffen, wie Polyamid (Aramid) oder Polyester, Naturfasern, oder mineralischen Fasermaterialien wie Basaltfasern oder keramische Fasern bestehen. Die faserförmigen Träger liegen als textile Flächengebilde aus Vlies, Maschenware, Gewirke oder Gestricke, nicht maschige Gebinde wie Gewebe, Gelege oder Geflechte, als Langfaser- oder Kurzfasermaterialien vor.

Im Detail liegt folgende Ausführung vor: Der faserförmige Träger in der vorliegenden Erfindung besteht aus faserförmigem Material (auch häufig Verstärkungsfasern genannt). Im Allgemeinen ist jegliches Material, aus dem die Fasern bestehen, geeignet, bevorzugt wird jedoch faserförmiges Material aus Glas, Kohlenstoff, Kunststoffen, wie z. B. Polyamid (Aramid) oder Polyester, Naturfasern oder mineralischen Fasermaterialien wie Basaltfasern oder keramische Fasern (Oxidische Fasern auf Basis von Aluminiumoxiden und/oder Siliciumoxiden) verwendet. Auch Mischungen von Fasertypen, wie z.B. Gewebe-Kombinationen aus Aramid- und Glasfasern, oder Kohlenstoff- und Glasfasern, können verwendet werden. Ebenso sind Hybrid-Composite-Bauteile mit Prepregs aus unterschiedlichen faserförmigen Trägern herstellbar. Glasfasern sind hauptsächlich wegen ihres relativ geringen Preises die am häufigsten verwendeten Fasertypen. Prinzipiell sind hier alle Arten von glasbasierenden Verstärkungsfasern geeignet (E-Glas-, S-Glas-, R-Glas-, M-Glas-, C-Glas-, ECR-Glas-, D-Glas-, AR-Glas-, oder Hohlglasfasern). Kohlenstofffasern kommen im Allgemeinen in Hochleistungsverbundwerkstoffen zum Einsatz, wo auch die im Verhältnis zur Glasfaser niedrigere Dichte bei gleichzeitig hoher Festigkeit ein wichtiger Faktor ist. Kohlenstofffasern (auch Carbonfasern) sind industriell hergestellte Fasern aus kohlenstoffhaltigen Ausgangsmaterialien, die durch Pyrolyse in graphitartig angeordneten Kohlenstoff umgewandelt werden. Man unterscheidet isotrope und anisotrope Typen: isotrope Fasern besitzen nur geringe Festigkeiten und geringere technische Bedeutung, anisotrope Fasern zeigen hohe Festigkeiten und Steifigkeiten bei gleichzeitig geringer Bruchdehnung. Als Naturfasern werden hier alle Textilfasern und Faserwerkstoffe bezeichnet, die aus pflanzlichem und tierischem Material gewonnen werden (z.B. Holz-, Zellulose-, Baumwoll-, Hanf-, Jute-, Leinen-, Sisal-, Bambusfasern). Aramid-Fasern weisen, ähnlich wie auch Kohlenstofffasern, einen negativen Wärmeausdehnungskoeffizienten auf, werden also bei Erwärmung kürzer. Ihre spezifische Festigkeit und ihr Elastizitätsmodul sind deutlich niedriger als jene von Kohlenstofffasern. In Verbindung mit dem positiven Ausdehnungskoeffizienten des Matrixharzes lassen sich hoch maßhaltige Bauteile fertigen. Gegenüber Kohlenstofffaser verstärkten Kunststoffen ist die Druckfestigkeit von Aramidfaser-Verbundwerkstoffen deutlich geringer. Bekannte Markennamen für Aramidfasern sind Nomex® und Kevlar® von DuPont, oder Teijinconex®, Twaron® und Technora® von Teijin. Besonders geeignet und bevorzugt sind Träger aus Glasfasern, Kohlenstofffasern, Aramidfasern oder keramischen Fasern. Bei dem faserförmigen Material handelt es sich um ein textiles Flächengebilde. Geeignet sind textile Flächengebilde aus Vlies, ebenso sogenannte Maschenware, wie Gewirke und Gestricke, aber auch nicht maschige Gebinde wie Gewebe, Gelege oder Geflechte. Außerdem unterscheidet man Langfaser- und Kurzfasermaterialien als Träger. Ebenfalls erfindungsgemäß geeignet sind Rovings und Garne. Alle genannten Materialien sind im Rahmen der Erfindung als faserförmiger Träger geeignet. Einen Überblick über Verstärkungsfasern enthält "Composites Technologien", Paolo Ermanni (Version 4), Script zur Vorlesung ETH Zürich, August 2007, Kapitel 7.

### Isocyanatkomponente

Als Isocyanatkomponente werden als erste Ausführungsform mit Blockierungsmitteln blockierte oder als zweite Ausführungsform intern blockierte Di- und Polyisocyanate eingesetzt. Bei den intern blockierten Isocyanaten handelt es sich um so genannte Uretdione.
Die erfindungsgemäß eingesetzten Di- und Polyisocyanate können aus beliebigen aromatischen, aliphatischen, cycloaliphatischen und/oder (cyclo)aliphatischen Di- und/oder Polyisocyanaten bestehen. Eine Auflistung möglicher Di- und Polyisocyanate sowie Reagenzien zu deren externen Blockierung finden sich in der deutschen Patentanmeldung DE 102010030234.1.

Die erfindungsgemäß verwendeten Polyisocyanate sind in einer ersten Ausführungsform extern blockiert. In Frage kommen dazu externe Blockierungsmittel, wie beispielsweise in DE 102010030234.1 zu finden sind. Bei den in dieser Ausführungsform eingesetzt Di- oder Polyisocyanate, handelt es sich bevorzugt um Hexamethylendiisocyanat (HDI), Diisocyanatodicyclohexylmethan (H₁₂MDI), 2-Methylpentandiisocyanat (MPDI), 2,2,4-Trimethylhexamethylendiisocyanat/2,4,4-Trimethylhexamethylendiisocyanat (TMDI) und/oder Norbornandiisocyanat (NBDI), wobei auch die Isocyanurate einsetzbar sind. Bevorzugte Blockierungsmittel sind ausgewählt aus Acetessigsäureethylester, Diisopropylamin, Methylethylketoxim, Malonsäurediethylester, ε-Caprolactam, 1,2,4-Triazol, Phenol oder substituierte Phenole und/oder 3,5-Dimethylpyrazol. Die besonders bevorzugt verwendeten Härterkomponente sind Isophorondiisocyanat- (IPDI-)Addukte, die Isocyanurat-Gruppierungen und ε-Caprolactam blockierte Isocyanatstrukturen enthalten.

Zusätzlich kann die Isocyanatkomponente 0,01 bis 5,0 Gew% Katalysatoren enthalten. Bevorzugt werden als Katalysatoren metallorganische Verbindungen wie Dibutylzinndilaurat, Zinkoctoat oder Bismuthneodecanoat, und/oder tertiäre Amine, besonders bevorzugt 1,4-Diazabicylco[2.2.2.]octan verwendet. Tertiäre Amine werden insbesondere in Konzentrationen zwischen 0,001 und 1 Gew% verwendet. Diese erfindungsgemäß eingesetzten reaktiven Polyurethanzusammensetzungen können beispielsweise bei normalen Bedingungen, z.B. mit DBTL-Katalyse, ab 160 °C, üblicherweise ab ca. 180 °C ausgehärtet werden.

In einer zweiten, bevorzugten Ausführungsform liegen die Isocyanatkomponenten mit einer internen Blockierung vor. Die interne Blockierung erfolgt über eine Dimerbildung über Uretdion-Strukturen, die bei erhöhter Temperatur wieder in die ursprünglich vorhandenen IsocyanatStrukturen zurückspalten und damit die Vernetzung mit dem Binder in Gang setzen.

Uretdiongruppen enthaltende Polyisocyanate sind wohlbekannt und werden beispielsweise in US 4,476,054, US 4,912,210, US 4,929,724 sowie EP 417 603 beschrieben. Ein umfassender Überblick über industriell relevante Verfahren zur Dimerisierung von Isocyanaten zu Uretdionen liefert das J. Prakt. Chem. 336 (1994) 185-200. Im Allgemeinen erfolgt die Umsetzung von Isocyanaten zu Uretdionen in Gegenwart löslicher Dimerisierungskatalysatoren wie z. B. Dialkylaminopyridinen, Trialkylphosphinen, Phosphorigsäure-triamiden oder Imdidazolen. Die Reaktion - optional in Lösemitteln, bevorzugt aber in Abwesenheit von Lösemitteln durchgeführt - wird bei Erreichen eines gewünschten Umsatzes durch Zusatz von Katalysatorgiften abgestoppt.
Überschüssiges monomeres Isocyanat wird im Anschluss durch Kurzwegverdampfung abgetrennt. Ist der Katalysator flüchtig genug, kann das Reaktionsgemisch im Zuge der Monomerabtrennung vom Katalysator befreit werden. Auf den Zusatz von Katalysatorgiften kann in diesem Fall verzichtet werden. Grundsätzlich ist zur Herstellung von Uretdiongruppen enthaltenden Polyisocyanaten eine breite Palette von Isocyanaten geeignet. Es können die oben genannten Di- und Polyisocyanate verwendet werden.

Bevorzugt sind sowohl für die Ausführungsform der extern blockierten Isocyanate als auch für die Ausführungsform der Uretdione Di- und Polyisocyanate aus beliebigen aliphatischen, cycloaliphatischen und/oder (cyclo)aliphatischen Di- und/oder Polyisocyanaten. Erfindungsgemäß werden Isophorondiisocyanat (IPDI), Hexamethylendiisocyanat (HDI), Diisocyanatodicyclohexylmethan (H₁₂MDI), 2-Methylpentandiisocyanat (MPDI), 2,2,4-Trimethylhexamethylendiisocyanat/2,4,4-Trimethylhexamethylendiisocyanat (TMDI), Norbornandiisocyanat (NBDI) verwendet. Ganz besonders bevorzugt werden IPDI, HDI, TMDI und H₁₂MDI eingesetzt, wobei auch die Isocyanurate einsetzbar sind.

Ganz besonders bevorzugt wird für das Matrixmaterial IPDI und HDI verwendet. Die Umsetzung dieser Uretdiongruppen enthaltenden Polyisocyanate zu Uretdiongruppen haltigen Härtern a) beinhaltet die Reaktion der freien NCO-Gruppen mit hydroxylgruppenhaltigen Monomeren oder Polymeren, wie z.B. Polyestern, Polythioethern, Polyethern, Polycaprolactamen, Polyepoxiden, Polyesteramiden, Polyurethanen oder nieder-molekularen Di-, Tri- und/oder Tetraalkoholen als Kettenverlängerer und gegebenenfalls Monoaminen und/oder Monoalkoholen als Kettenabbrecher und wurde schon häufig beschrieben (EP 669 353, EP 669 354, DE 30 30 572, EP 639 598 oder EP 803 524).

Bevorzugte Uretdiongruppen aufweisende Härter a) haben einen freien NCO-Gehalt von weniger als 5 Gew% und einen Gehalt an Uretdiongruppen von 3 bis 25 Gew%, bevorzugt 6 bis 18 Gew% (berechnet als C₂N₂O₂, Molekulargewicht 84). Bevorzugt werden Polyester und monomere Dialkohole. Außer den Uretdiongruppen können die Härter auch Isocyanurat-, Biuret-, Allophanat-, Urethan- und/oder Harnstoff-Strukturen aufweisen.

Die Isocyanatkomponente liegt bevorzugt unterhalb von 40 °C in fester Form und oberhalb von 125 °C in flüssiger Form vor. Gegebenenfalls kann die Isocyanatkomponente weitere aus der Polyurethanchemie bekannte Hilfs- und Zusatzstoffe enthalten. In Bezug auf die Uretdion enthaltende Ausführungsform weist die Isocyanatkomponente einen freien NCO-Gehalt von kleiner 5 Gew% und einen Uretdiongehalt von 3 bis 50 Gew%, bevorzugt bis 25 Gew% auf.

Darüber hinaus kann die Isocyanatzusammensetzung dieser Ausführungsform 0,01 bis 5 Gew%, bevorzugt von 0,3 bis 2 Gew% mindestens eines Katalysators ausgewählt aus quarternären Ammoniumsalzen, bevorzugt Tetralkylammoniumsalze, und/oder quarternären Phosphoniumsalzen mit Halogenen, Hydroxiden, Alkoholaten oder organischen oder anorganischen Säureanionen als Gegenion, und 0,1 bis 5 Gew%, bevorzugt 0,3 bis 2 Gew% mindestens eines Co-Katalysators, ausgewählt aus entweder mindestens einem Epoxid und/oder mindestens einem Metallacetylacetonat und/oder quarternären Ammoniumacetylacetonat und/oder quarternären Phosphoniumacetylacetonat enthalten. Alle Mengenangaben zu den (Co-)Katalysatoren sind bezogen auf die Gesamtformulierung des Matrixmaterials. Beispiele für Metallacetylacetonate sind Zinkacetylacetonat, Lithiumacetylacetonat und Zinnacetylacetonat, allein oder in Mischungen. Bevorzugt wird Zinkacetylacetonat eingesetzt.
Beispiele für quarternäre Ammoniumacetylacetonate oder quarternäre Phosphoniumacetylacetonate finden sich in DE 102010030234.1. Besonders bevorzugt werden Tetraethylammoniumacetylacetonat und Tetrabutylammoniumacetylacetonat eingesetzt. Selbstverständlich können auch Mischungen solcher Katalysatoren verwendet werden.

Beispiele für die Katalysatoren finden sich in DE 102010030234.1. Diese Katalysatoren können allein oder in Mischungen zugesetzt werden. Bevorzugt werden Tetraethylammoniumbenzoat und Tetrabutylammoniumhydroxid verwendet.

Als epoxidhaltige Co-Katalysatoren kommen dabei z.B. Glycidylether und Glycidylester, aliphatische Epoxide, Diglycidylether auf Basis Bisphenol A und Glycidylmethacrylate in Frage. Beispiele für solche Epoxide sind Triglycidylisocyanurat (TGIC, Handelsname ARALDIT 810, Huntsman), Gemische aus Terephthalsäurediglycidylester und Trimelitsäuretriglycidylester (Handelsname ARALDIT PT 910 und 912, Huntsman), Glycidylester der Versaticsäure (Handelsname KARDURA E10, Shell), 3,4-Epoxycyclohexylmethyl-3',4'-epoxycyclohexancarboxylat (ECC), Diglycidylether auf Basis Bisphenol A (Handelsname EPIKOTE 828, Shell) Ethylhexylglycidylether, Butylglycidylether, Pentaerythrittetraglycidylether, (Handelsname POLYPOX R 16, UPPC AG) sowie andere Polypoxtypen mit freien Epoxygruppen. Es können auch Mischungen eingesetzt werden. Bevorzugt werden ARALDIT PT 910 und 912 eingesetzt.

Je nach Zusammensetzung der verwendeten reaktiven oder hochreaktiven Isocyanatkomponente und gegebenenfalls zugesetzten Katalysatoren können sowohl die Geschwindigkeit der Vernetzungsreaktion bei der Herstellung der Composite-Bauteile als auch die Eigenschaften der Matrix in weiten Bereichen variiert werden.

### Harzkomponenten

Erfindungsgemäß werden als Harzkomponenten Reaktionsharze auf Methacrylatbasis verwendet. Die erfindungsgemäß verwendete Harzkomponente weist insbesondere folgende Zusammensetzung auf:
- 30 bis 100 Gew%, bevorzugt 40 bis 80 Gew% und besonders bevorzugt 40 bis 60 Gew% Monomere, bevorzugt (Meth)acrylate und/oder mit (Meth)acrylaten copolymerisierbare Komponenten,
- 0 bis 40 Gew%, bevorzugt 5 bis 30 Gew% eines oder mehrere Präpolymere,
- 0 bis 30 Gew%, bevorzugt bis 15 Gew% und besonders bevorzugt bis 10 Gew% Vernetzer, bevorzugt ausgewählt aus der Gruppe der Oligo- oder Di(meth)acrylate,
- 0 bis 10 Gew%, bevorzugt 0,5 bis 8 Gew% und besonders bevorzugt 3 bis 6 Gew% Initiatoren, wie z.B. Photoinitiatoren, bevorzugt in diesem Fall Hydroxyketone und/oder Bisacylphosphine.

Bevorzugt enthält die Harzkomponente keinen Vernetzer.

Die Schreibweise (Meth)acrylate umfasst dabei sowohl Methacrylate als auch Acrylate, sowie Mischungen aus Methacrylaten und Acrylate.

Zusätzlich können noch weitere Komponenten optional enthalten sein. Als Hilfs- und Zusatzstoffe können zusätzlich Regler, Weichmacher, Stabilisatoren und/oder Inhibitoren eingesetzt werden. Darüber hinaus können Farbstoffe, Füllstoffe, Netz-, Dispergier- und Verlaufshilfsmittel, Haftvermittler, UV-Stabilisatoren, Entschäumer und Rheologieadditive zugesetzt werden. Insbesondere kann die Harzkomponente folgende zusätzlichen Bestandteile enthalten:
- 1 bis 20 Gew% Urethan(meth)acrylate.

Entscheidend für die vorliegende Erfindung ist, dass die Monomere und/oder Präpolymere aus der Harzkomponente funktionelle Gruppen aufweisen. Als solche funktionellen Gruppen sind Hydroxylgruppen, Aminogruppen und/oder Thiolgruppen geeignet, welche mit den freien Isocyanatgruppen, bzw. Uretdiongruppen aus der Isocyanatkomponente unter Addition reagieren und somit zusätzlich vernetzen und aushärten. Eine hydroxyfunktionelle Harzkomponente weist dabei beispielsweise eine OH-Zahl von 10 bis 1000, bevorzugt von 20 bis 500 mg, besonders bevorzugt von 20 bis 150 mg KOH/Gramm auf.

Insbesondere wird die Menge an den funktionellen Gruppen so gewählt, dass auf jede funktionelle Gruppe der Harzkomponenten 0,6 bis 2,0 Isocyanatäquivalente bzw. 0,3 bis 1,0, bevorzugt 0,4 bis 0,8 und besonders bevorzugt 0,45 bis 0,55 Uretdiongruppen der Isocyanatkomponente entfällt. Dies entspricht 0,6 bis 2,0, bevorzugt 0,8 bis 1,6 und besonders bevorzugt 0,9 bis 1,1 extern blockierte Isocyanatgruppen der Isocyanatkomponente.

Photoinitiatoren und ihre Herstellung werden beschrieben z. B. in "Radiation Curing in Polymer Science & Technology, Vol II: Photoinitiating Systems" von J. P. Fouassier, J. F. Rabek , Elsevier Applied Science, London und New York, 1993. Häufig handelt es sich hierbei um α-Hydroxyketone bzw. Derivate dieser oder Phosphine. Die Photoinitiatoren können, falls vorhanden, in Mengen von 0,2 bis 10 Gew.-% enthalten sein. Als Photoinitiatoren kommen beispielsweise in Frage Basf-CGI-725 (BASF), Chivacure 300 (Chitec), Irgacure PAG 121 (BASF), Irgacure PAG 103 (BASF), Chivacure 534 (Chitec), H-Nu 470 (Spectra Group limited), TPO (BASF), Irgacure 651 (BASF), Irgacure 819 (BASF), Irgacure 500 (BASF), Irgacure 127 (BASF), Irgacure 184 (BASF), Duracure 1173 (BASF).

Durch den Einsatz von Kombinationen aus verschiedenen Initiatoren (z.B. zwei UV-Initiatoren, zwei verschiedene thermische oder Redox-Initiatoren oder eine Kombination aus einem UV-Initiator und einem thermischen oder Redox-Initiator) in der Matrix konnte die Qualität der Bauteile/Laminate überraschend weiter verbessert werden.
Durch den Einsatz von Polyolen in der Matrix mit Zusatz von Kombinationen aus verschiedenen Initiatoren (s.o.) konnte die Qualität der Bauteile/Laminate überraschend nochmals verbessert werden. Vermutlich wurden in diesem Fall die Restmonomergehalte vom Halbzeug bis zum Bauteil im gesamten Prozess im Vergleich gesenkt bzw. die Polymerisation der Monomere lief vollständiger ab und die damit verbundene Nachpolymersation im weiteren Prozess begünstigte diesen Effekt vorteilhaft.

Bei den in dem Reaktionsharz enthaltenden Monomeren handelt es sich um Verbindungen, die ausgewählt sind aus der Gruppe der (Meth)acrylate wie beispielsweise Alkyl(meth)acrylate von gradkettigen, verzweigten oder cycloaliphatischen Alkoholen mit 1 bis 40 C-Atomen, wie zum Beispiel Methyl(meth)acrylat, Ethyl(meth)acrylat, n-Butyl(meth)acrylat oder 2-Ethylhexyl(meth)acrylat.

Als Bestandteile von Monomergemischen eignen sich auch zusätzliche Monomere mit einer weiteren funktionellen Gruppe, wie a,β-ungesättigte Mono- oder Dicarbonsäuren, beispielsweise Acrylsäure, Methacrylsäure oder Itaconsäure; Ester der Acrylsäure oder Methacrylsäure mit zweiwertigen Alkoholen, beispielsweise Hydroxyethyl(meth)acrylat oder Hydroxypropyl(meth)acrylat; Acrylamid oder Methacrylamid; oder Dimethylaminoethyl(meth)acrylat. Weitere geeignete Bestandteile von Monomergemischen sind beispielsweise Glycidyl(meth)acrylat oder silylfunktionelle (Meth)acrylate.

Neben den zuvor dargelegten (Meth)acrylaten können die Monomergemische auch weitere ungesättigte Monomere aufweisen, die mit den zuvor genannten (Meth)acrylaten und mittels freiradikalischer Polymerisation copolymerisierbar sind. Hierzu gehören unter anderem 1-Alkene oder Styrole.

Ein optionaler Bestandteil des erfindungsgemäßen Reaktionsharzes sind die Vernetzer. Dabei handelt es sich insbesondere um mehrfunktionelle Methacrylate wie Allyl(meth)acrylat. Besonders bevorzugt sind di- oder tri-(Meth)acrylate wie beispielsweise 1,4-Butandioldi(meth)acrylat, Tetraethylenglycoldi(meth)acrylat, Triethylenglycoldi(meth)acrylat oder Trimethylolpropantri(meth)acrylat.

Im Einzelnen wird die Zusammensetzung der Monomere nach Anteil und Zusammensetzung zweckmäßigerweise im Hinblick auf die gewünschte technische Funktion und das zu benetzende Trägermaterial gewählt werden.

Die Harzkomponente kann neben den aufgeführten Monomeren auch Polymere enthalten, zur besseren Unterscheidbarkeit im Rahmen dieses Schutzrechtes als Präpolymer bezeichnet, bevorzugt Polyester oder Poly(meth)acrylate. Diese werden zur Verbesserung der Polymerisationseigenschaften, der mechanischen Eigenschaften, der Haftung zum Trägermaterial, der Viskositätseinstellung bei der Verarbeitung bzw. Benetzung des Trägermaterials mit dem Harz, sowie der optischen Eigenschaften der Harze eingesetzt. Der Präpolymeranteil des Reaktionsharzes liegt dabei zwischen 0 Gew% und 50 Gew%, bevorzugt zwischen 15 Gew% und 40 Gew%. Die Poly(meth)acrylate können zusätzliche funktionelle Gruppen zur Haftvermittlung oder zur Copolymerisation in der Vernetzungsreaktion, wie beispielsweise in Form von Doppelbindungen, aufweisen. Bevorzugt weisen die Präpolymere Hydroxy-, Amin- oder Thiolgruppen auf.

Besagte Poly(meth)acrylate sind im Allgemeinen aus den gleichen Monomeren zusammengesetzt, wie sie bereits bezüglich der Monomere im Harzsystem aufgelistet wurden. Sie können durch Lösungs-, Emulsions-, Suspensions-, Substanz- oder Fällungspolymerisation gewonnen werden und werden dem System als Reinstoff zugesetzt.
Besagte Polyester werden in Substanz via Polykondensation oder ringöffnende Polymerisation gewonnen und setzen sich aus den für diese Anwendungen bekannten Bausteinen zusammen.

Als Regler können alle aus der radikalischen Polymerisation bekannten Verbindungen verwendet werden. Bevorzugt werden Mercaptane wie n-Dodecylmercaptan eingesetzt.

Ebenso können herkömmliche UV-Stabilisatoren eingesetzt werden. Vorzugsweise werden die UV-Stabilisatoren ausgewählt aus der Gruppe der Benzophenonderivate, Benzotriazolderivate, Thioxanthonatderivate, Piperidinolcarbonsäureesterderivate oder Zimtsäureesterderivate.
Aus der Gruppe der Stabilisatoren bzw. Inhibitoren werden vorzugsweise substituierte Phenole, Hydrochinonderivate, Phosphine und Phosphite eingesetzt.

Als Rheologieadditive werden vorzugsweise Polyhydroxycarbonsäureamide, Harnstoffderivate, Salze ungesättigter Carbonsäureester, Alkylamoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet. Es wurde gefunden, dass Rheologieadditive auf Basis pyrogener oder gefällter, optional auch silanisierter, Kieselsäuren mit einer BET-Oberfläche von 10 - 700 nm²/g besonders geeignet sind.

Entschäumer werden vorzugsweise ausgewählt aus der Gruppe der Alkohole, Kohlenwasserstoffe, paraffinbasischen Mineralöle, Glycolderivate, Derivate von Glycolsäureestern, Essigsäureestern und Polysiloxanen eingesetzt.

### Polyole

Ein besonderer Vorteil der erfindungsgemäßen Zugabe der Polyole besteht in einer insgesamt besseren Verarbeitbarkeit, bei dem Verpressen mehrerer Lagen Prepregs eine bessere Verbindung dieser Lagen zueinander und eine bessere Homogenisierung des Matrixmaterials über das gesamte Formteil.

Erfindungsgemäß enthält die Zusammensetzung zusätzlich zu den Reaktionsharzen auf Methacrylatbasis Polyole, die mit den Isocyanatkomponenten gleichfalls eine Vernetzungsreaktion eingehen, als OH-funktionelle Cobindemittel. Durch Zusatz dieser Polyole, die in Verfahrensschritt III nicht reaktiv sind, kann die Rheologie und damit die Verarbeitung der Halbzeuge aus Verfahrensschritt III, sowie der Endprodukte genauer eingestellt werden. So wirken die Polyole beispielsweise im Halbzeug aus Verfahrensschritt III als Weichmacher bzw. genauer als Reaktivverdünner. Die Polyole können dergestalt zugesetzt werden, dass bis zu 80 %, bevorzugt bis zu 50 % der OH-Funktionalitäten des Reaktionsharzes durch diese ersetzt werden.

Als OH-funktionelle Cobindemittel eignen sich grundsätzlich alle in der PU-Chemie üblicherweise eingesetzten Polyole, solange deren OH-Funktionalität mindestens zwei, bevorzugt zwischen drei und sechs beträgt, wobei Diole (difunktionelle Polyole) nur in Mischungen mit Polyolen, die mehr als zwei OH-Funktionalitäten aufweisen, eingesetzt werden. Unter der Funktionalität einer Polyolverbindung versteht man die Anzahl der zur Reaktion befähigten OH-Gruppen des Moleküls. Für den Verwendungszweck ist es notwendig, Polyolverbindungen einzusetzen, die eine OH-Funktionalität von mindestens 3 aufweisen, um bei der Reaktion mit den Isocyanatgruppen der Uretdione ein dreidimensionales dichtes Polymernetzwerk aufzubauen. Selbstverständlich können dabei auch Mischungen verschiedener Polyole eingesetzt werden.

Ein einfaches geeignetes Polyol ist z.B. Glycerin. Andere niedermolekulare Polyole werden beispielsweise von der Firma Perstorp® unter den Produktnamen Polyol®, Polyol® R oder Capa®, von der Firma Dow Chemicals unter den Produktnamen Voranol® RA, Voranol® RN, Voranol® RH oder Voranol® CP, von der Firma BASF unter dem Namen Lupranol® und von der Firma DuPont unter dem Namen Terathane® vertrieben. Spezifische Produkte unter Angabe der Hydroxylzahlen und der Molmassen können beispielsweise in der deutschen Patentanmeldung mit dem Prioritätsaktenzeichen 102014208415.6 nachgelesen werden.

Alternativ zu den genannten niedermolekularen Polyolen können auch oligomere Polyole zum Einsatz kommen. Hierbei handelt es sich beispielsweise um an sich bekannte lineare oder verzweigte hydroxylgruppenhaltige Polyester, Polycarbonate, Polycaprolactone, Polyether, Polythioether, Polyesteramide, Polyurethane oder Polyacetale, bevorzugt um Polyester oder Polyether. Diese Oligomere weisen vorzugsweise ein zahlenmittleres Molekulargewicht von 134 bis 4000 auf. Besonders bevorzugt sind lineare hydroxylgruppenhaltige Polyester - Polyesterpolyole - oder Gemische solcher Polyester. Sie werden z.B. durch Umsetzung von Diolen mit unterschüssigen Mengen an Dicarbonsäuren, entsprechenden Dicarbonsäureanhydriden, entsprechenden Dicarbonsäureestern von niederen Alkoholen, Lactonen oder Hydroxycarbonsäuren hergestellt. Beispiele für geeignete Bausteine solcher Polyester finden sich gleichfalls in der deutschen Patentanmeldung mit dem Prioritätsaktenzeichen 102014208415.6.

Besonders bevorzugt werden Polyester als oligomere Polyole eingesetzt, deren OH-Zahl zwischen 25 und 800, bevorzugt zwischen 40 und 400 liegt, deren Säurezahl höchstens 2 mg KOH / g beträgt und deren molare Masse zwischen 200 und 4000 g/mol, bevorzugt zwischen 300 und 800 g/mol liegt. Die OH-Zahl wird analog DIN 53 240-2 bestimmt; die Säurezahl analog DIN EN ISO 2114. Die molare Masse wird aus den Hydroxyl- und Carboxyl-Endgruppen berechnet.

Genauso bevorzugt werden Polyether als oligomere Polyole eingesetzt. Diese weisen insbesondere eine OH-Zahl zwischen 25 und 1200 mg KOH / g, bevorzugt zwischen 40 und 1000 mg KOH / g, besonders bevorzugt zwischen 60 und 900 mg KOH / g und eine molare Masse M_{w} zwischen 100 und 2000 g/mol, bevorzugt zwischen 150 und 800 g/mol auf. Ein Beispiel für einen besonders geeigneten Polyether ist Lupranol® 3504/1 der BASF Polyurethanes GmbH.

Als ganz besonders bevorzugtes Beispiel werden Polycaprolactone als oligomere Polyole eingesetzt, deren OH-Zahl zwischen 25 und 540, deren Säurezahl zwischen 0,5 und 1 mg KOH / g beträgt und deren molare Masse zwischen 240 und 2500 g/mol liegt. Geeignete Polycaprolactone sind Capa 3022,Capa 3031,Capa 3041,Capa 3050,Capa 3091,Capa 3201,Capa 3301 Capa 4101 ,Capa 4801 Capa 6100,Capa 6200,Capa 6250, alle von Perstorp, Schweden. Selbstverständlich können auch Mischungen der Polycaprolactone, Polyester, Polyether und Polyole verwendet werden.

### Die Aushärtung in Verfahrensschritt III

Wie ausgeführt gibt es verschiedene technische Möglichkeiten das Reaktionsharz, ohne Beteiligung der Polyole und der Isocyanatkomponente in Verfahrensschritt III auszuhärten.

In einer ersten Alternative erfolgt die Aushärtung thermisch. Dazu sind dem Reaktionsharz Peroxide und/oder Azoinitiatoren zugemischt, die unter Erhöhung der Temperatur auf eine für den jeweiligen Initiator geeignete Zerfallstemperatur die Aushärtung der Harzkomponente initiieren. Solche Initiatoren und die dazugehörigen Zerfallstemperaturen sind dem Fachmann allgemein bekannt. Geeignete Initiierungstemperaturen für eine solche thermische Aushärtung liegen in dem beschriebenen Verfahren bevorzugt mindestens 20 °C oberhalb der Umgebungstemperatur und mindestens 10 °C unterhalb der Aushärtetemperatur der Isocyanatkomponente in Verfahrensschritt V. So kann eine geeignete Initiierung beispielsweise bei einer schon bei tiefen Temperaturen eintretenden Isocyanatvernetzung beispielsweise zwischen 40 und 70 °C liegen. In der Regel wird eine Initiierungstemperatur für die thermische Initiierung - mit entsprechenden abgestimmten Isocyanatkomponenten - zwischen 50 und 110 °C gewählt. Eine bevorzugte Alternative zu einer thermischen Initiierung stellt eine so genannte Redox-Initiierung dar. Dabei wird ein 2K-Redoxsystem, bestehend aus einem Initiator, in der Regel einem Peroxid, bevorzugt Dilauroylperoxid und/oder Dibenzoylperoxid, in der ersten Komponente und einem Beschleuniger, in der Regel einem Amin, bevorzugt einem tertiären aromatischen Amin in einer zweiten Komponente durch Mischen der beiden Komponenten erzeugt. Durch das Mischen, welches in der Regel als letzter Schritt in Verfahrensschritt I. erfolgt, wird eine Initiierung bewirkt, die innerhalb eines offenen Fensters, in der Regel zwischen 10 und 40 min, eine Imprägnierung in Verfahrensschritt II. weiterhin ermöglicht. Entsprechend muss bei einer solchen, bei Raumtemperatur durchführbaren Initiierung Verfahrensschritt II. innerhalb dieses offenen Fensters nach Verfahrensschritt I. durchgeführt werden.

Die dritte Alternative stellt eine Photoinitiierung, z.B. mittels elektromagnetischer Strahlung (insbesondere UV-Strahlung), Elektronenstrahlung oder einem Plasma dar.

UV-Härtung und UV-Lampen werden z. B. beschrieben in "Radiation Curing in Polymer Science & Technology, Vol I: Fundamentals and Methods" von J. P. Fouassier, J. F. Rabek, Elsevier Applied Science, London und New York, 1993, Chapter 8, Seiten 453 bis 503. Bevorzugt werden UV-Lampen, die wenig bis gar keine Wärmstrahlung aussenden, z.B. UV-LED-Lampen verwendet.

Elektronenstrahlhärtung und -härter werden z. B. beschrieben in "Radiation Curing in Polymer Science & Technology, Vol I: Fundamentals and Methods" von J. P. Fouassier, J. F. Rabek , Elsevier Applied Science, London und New York, 1993, Chapter 4, Seiten 193 bis 225 und in Chapter 9, Seiten 503 bis 555. Werden Elektronenstrahlen zur Polymerisationsinitiierung verwendet, sind Photoinitiatoren nicht mehr notwendig.

Das gleiche gilt für Plasmaanwendungen. Plasmen werden häufig im Vakuum eingesetzt. Plasmapolymerisation von MMA wird Beispielsweise in den Arbeiten von C. W. Paul, A. T. Bell und D. S. Soong "Initiation of Methyl Methacrylate Polymerization by the Nonvolatile Products of a Methyl Methacrylate Plasma. 1. Polymerization Kinetics" (Macromolecules 1985, vol. 18, 11, 2312-2321) beschrieben. Hier wird ein solches Vakuumplasma eingesetzt.

Erfindungsgemäß wird bei dem vorliegenden Verfahren als Radikalquelle ein sogenanntes Atmosphärendruckplasma eingesetzt. Dazu können beispielsweise handelsübliche Plasmajets/Plasmabeams, wie sie z.B. die Firma Plasmatreat GmbH oder die Firma Diener GmbH anbieten, eingesetzt werden. Das Plasma arbeitet unter Atmosphärendruck und wird unter anderem in der Automobilindustrie zum Entfernen von Fetten oder anderen Verunreinigungen auf Oberflächen eingesetzt. Im Gegensatz zu dem in der Literatur beschriebenen Plasmaverfahren wird das Plasma erfindungsgemäß außerhalb der eigentlichen Reaktionszone (Polymerisation) erzeugt und mit hoher Störmungsgeschwingkeit auf die Oberfläche der zu behandelnden Composites geblasen. Dabei entsteht eine Art "Plasmafackel". Vorteil des Verfahrens ist, dass die eigentliche Plasmabildung nicht durch das Substrat beeinflusst wird, was zu einer hohen Prozesssicherheit führt. Die Plasmajets werden normalerweise mit Luft betrieben, so dass ein Sauerstoff/Stickstoff Plasma entsteht. Bei den Plasmajets wird das Plasma durch eine elektrische Entladung im inneren der Düse erzeugt. Die Elektroden sind elektrisch getrennt. Es wird eine so hohe Spannung angelegt, bis ein Funken von einer Elektrode zur anderen übergeht. Es kommt zur Entladung. Dabei können unterschiedlich viele Entladungen pro Zeiteinheit eingestellt werden. Die Entladungen können durch Pulsen einer Gleichspannung erfolgen. Eine weitere Möglichkeit ist die Entladungen durch eine Wechselspannung zu erreichen.

Nach der Herstellung des Prepregs auf der Faser mit Hilfe von Strahlen oder Plasmen in Verfahrensschritt III kann dieses Produkt gestapelt und in Form gebracht werden. So dann erfolgt die endgültige Vernetzung mit Hilfe von Wärme. Je nach Einsatz und Menge von Katalysatoren erfolgt diese Vernetzung bei Temperaturen zwischen 80 und 220 °C und 72 h und 5 sec, bevorzugt bei Temperaturen zwischen 140 und 200 °C sowie bei Aushärtungszeiten von 1 min bis 30 min. Bevorzugt wird während der Vernetzung ein äußerer Druck aufgelegt.

Die erfindungsgemäß eingesetzten Polymerzusammensetzungen bieten einen sehr guten Verlauf bei geringer Viskosität und damit eine gute Imprägnierfähigkeit und im ausgehärteten Zustand eine ausgezeichnete Chemikalienbeständigkeit. Bei Verwendung von aliphatischen Vernetzern, wie z.B. IPDI oder H₁₂MDI, und durch die erfindungsgemäße Verwendung der funktionalisierten Poly(meth)acrylate wird zusätzlich noch eine gute Witterungsbeständigkeit erreicht.

Die erfindungsgemäß hergestellten Composite-Halbzeuge sind weiterhin bei Raumtemperatur-Bedingungen sehr lagerstabil, in der Regel mehrere Wochen und sogar Monate. Sie können somit jederzeit zu Composite-Bauteilen weiterverarbeitet werden. Dies ist der wesentliche Unterschied zu den Systemen nach Stand der Technik, die reaktiv und nicht lagerstabil sind, da diese nach dem Aufbringen sofort beginnen z.B. zu Polyurethanen zu reagieren und somit zu vernetzen.

Danach können die lagerfähigen Composite-Halbzeuge zu einem späteren Zeitpunkt zu Composite-Bauteilen weiterverarbeitet werden. Durch Verwendung der erfindungsgemäßen Composite-Halbzeuge erfolgt eine sehr gute Imprägnierung des faserförmigen Trägers, dadurch bedingt, dass die flüssigen Harzkomponenten, enthaltend die Isocyanatkomponente, die Faser des Trägers sehr gut benetzen, wobei die zu einer beginnenden zweite Vernetzungsreaktion führen könnende thermische Belastung der Polymerzusammensetzung durch eine vorherige Homogenisierung der Polymerzusammensetzung vermieden wird, des weiteren fallen die Prozessschritte der Vermahlung und Siebung in einzelne Partikelgrößenfraktionen weg, sodass eine höhere Ausbeute an imprägniertem faserförmigen Träger erzielt werden kann.

Ein weiterer großer Vorteil der erfindungsgemäß hergestellten Composite-Halbzeuge ist, dass die hohen Temperaturen, wie sie beim Schmelzimprägnierverfahren oder bei der Ansinterung von pulverförmigen reaktiven Polyurethanzusammensetzungen zumindest kurzzeitig vonnöten sind, bei diesem erfindungsgemäßen Verfahren nicht zwingend erforderlich sind.

### Besondere Aspekte des erfindungsgemäßen Verfahrens

Verfahrensschritt II, die Imprägnierung, erfolgt durch Tränkung der Fasern, Gewebe oder Gelege mit der in Verfahrensschritt I hergestellten Formulierung. Bevorzugt erfolgt die Imprägnierung bei Raumtemperatur.

Verfahrensschritt III, die Aushärtung der Harzkomponente, erfolgt direkt nach Verfahrensschritt II. Das Aushärten erfolgt beispielsweise durch Bestrahlung mit elektromagnetischer Strahlung, bevorzugt UV-Strahlung, mit Elektronenstrahlung oder durch Anlegen eines Plasmafeldes. Dabei ist darauf zu achten, dass die Temperatur unterhalb der für Verfahrensschritt V benötigten Aushärtetemperatur liegt.

Die erfindungsgemäß hergestellten Composite-Halbzeuge / Prepregs weisen nach Verfahrensschritt III bzw. IV eine sehr hohe Lagerstabilität bei Raumtemperatur auf. Diese beträgt je nach enthaltener reaktiver Polyurethanzusammensetzung mindestens einige Tage bei Raumtemperatur. In der Regel sind die Composite-Halbzeuge mehrere Wochen bei 40 °C und darunter, sowie bei Raumtemperatur auch mehrere Jahre lagerstabil. Die so hergestellten Prepregs sind nicht klebrig und daher sehr gut zu handhaben und weiter zu verarbeiten. Die erfindungsgemäß eingesetzten reaktiven oder hochreaktiven Polyurethanzusammensetzungen weisen demnach eine sehr gute Haftung und Verteilung auf dem faserförmigen Träger auf.

In Verfahrensschritt IV können die so hergestellten Composite-Halbzeuge / Prepregs je nach Bedarf zu unterschiedlichen Formen kombiniert und zugeschnitten werden. Insbesondere werden zur Konsolidierung mehrerer Composite-Halbzeuge zu einem einzigen Composite und vor endgültiger Vernetzung des Matrixmaterials zur Matrix zugeschnitten, gegebenenfalls vernäht oder anderweitig fixiert.

In Verfahrensschritt V erfolgt die endgültige Aushärtung der Composite-Halbzeuge zu Formteilen, die duroplastisch vernetzt sind. Dies erfolgt durch eine thermische Aushärtung der funktionellen Gruppe, bevorzugt der Hydroxygruppen der Harzkomponente 1 mit der Isocyanatkomponente.
Im Rahmen dieser Erfindung erfolgt dieser Vorgang der Herstellung der Composite-Bauteile aus den Prepregs je nach Aushärtungszeit bei Temperaturen von oberhalb etwa 160 °C bei Einsatz von reaktiven Matrixmaterialien (Variante I), oder bei mit entsprechenden Katalysatoren versehenen hochreaktiven Matrixmaterialien (Variante II) bei Temperaturen von über 80 °C, insbesondere über 100 °C. Insbesondere wird die Aushärtung bei einer Temperatur zwischen 80 und 200 °C, besonders bevorzugt bei einer Temperatur zwischen 120 und 180 °C, durchgeführt.

Bei der Aushärtung in Verfahrensschritt V können die Composite-Halbzeuge zusätzlich in einer geeigneten Form unter Druck und gegebenenfalls Anlegen von Vakuum verpresst werden.

Die erfindungsgemäß eingesetzten reaktiven Polyurethanzusammensetzungen werden bei normalen Bedingungen, z.B. mit DBTL-Katalyse, ab 160 °C, üblicherweise ab ca. 180 °C ausgehärtet. Die erfindungsgemäß eingesetzten reaktiven Polyurethanzusammensetzungen bieten einen sehr guten Verlauf und damit eine gute Imprägnierfähigkeit und im ausgehärteten Zustand eine ausgezeichnete Chemikalienbeständigkeit. Bei Verwendung von aliphatischen Vernetzern (z. B. IPDI oder H12MDI) wird zusätzlich noch eine gute Witterungsbeständigkeit erreicht.

Mit Hilfe der erfindungsgemäß eingesetzten hochreaktiven und somit bei Niedrigtemperatur härtenden Isocyanatkomponente kann bei 80 bis 160 °C Aushärtungstemperatur nicht nur Energie und Aushärtungszeit gespart werden, sondern es lassen sich auch viele temperatursensible Träger verwenden.

Die Uretdiongruppen-haltigen Polyurethanzusammensetzungen der zweiten Ausführungsform werden in Verfahrensschritt V bei Temperaturen von 80 bis 160 °C, und zwar je nach Art des Trägers ausgehärtet. Bevorzugt beträgt diese Aushärtungstemperatur 120 bis 180 °C, besonders bevorzugt 120 bis 150 °C, insbesondere bevorzugt liegt die Temperatur zur Aushärtung in einem Bereich zwischen 130 bis 140 °C. Die Zeit zur Aushärtung der erfindungsgemäß eingesetzten Polyurethanzusammensetzung liegt innerhalb von 5 bis 60 Minuten.

Möglich ist aber auch die Verwendung von speziellen Katalysatoren zur Reaktionsbeschleunigung der zweiten Aushärtung in Verfahrensschritt V z.B. quartäre Ammnoniumsalze, vorzugsweise Carboxylate oder Hydroxide, besonders bevorzugt in Kombination mit Epoxiden oder Metallacetylacetonaten, vorzugsweise in Kombination mit quartären Ammoniumhalogeniden. Diese Katalysatorsysteme können dafür sorgen dass die Härtungstemperatur für die zweite Aushärtung bis auf 100 °C zurückgeht, oder aber bei höheren Temperaturen geringere Härtungszeiten benötigt werden.

### Weitere Bestandteile der Prepregs

Zusätzlich zu der Harzkomponente, dem Trägermaterial und der Isocyanatkomponente können die Composite-Halbzeuge noch weitere Zusatzstoffe aufweisen. So können beispielsweise Lichtschutzmittel wie z.B. sterisch gehinderte Amine, oder andere Hilfsmittel, wie sie z. B. in EP 669 353 beschrieben wurden, in einer Gesamtmenge von 0,05 bis 5 Gew% zugesetzt werden. Füllstoffe und Pigmente wie z. B. Titandioxid können in einer Menge bis zu 30 Gew% der Gesamtzusammensetzung zugesetzt werden.
Für die Herstellung der erfindungsgemäßen reaktiven Polyurethanzusammensetzungen können darüber hinaus Zusatzstoffe wie Verlaufsmittel, z.B. Polysilicone oder Haftvermittler, z.B. auf Acrylatbasis, zugesetzt werden.

Gegenstand der Erfindung ist auch die Verwendung der Prepregs, insbesondere mit faserförmigen Trägern aus Glas-, Kohle- oder Aramid-Fasern. Gegenstand der Erfindung ist insbesondere auch die Verwendung der erfindungsgemäß hergestellten Prepregs, zur Herstellung von Composites im Boots- und Schiffbau, in der Luft- und Raumfahrtechnik, im Automobilbau, für Zweiräder, bevorzugt Motorräder und Fahrräder, in den Bereichen Automotive, Construction, Medizintechnik, Sport, Elektro- und Elektronik-Industrie oder Energieerzeugungsanlagen, z.B. für Rotorblätter bei Windkraftanlagen.

Gegenstand der Erfindung sind auch die aus den erfindungsgemäß hergestellten Composite-Halbzeuge bzw. Prepregs hergestellten Formteile bzw. Composite-Bauteile, aufgebaut aus mindestens einem faserförmigen Träger und mindestens einer vernetzten Reaktivzusammensetzung, bevorzugt einer vernetzten Uretdiongruppen haltigen Reaktivzusammensetzung, enthaltend ein (Meth)acrylatharz und Polyole als Matrix.

### Beispiele

Folgende Glasfasergelege/-gewebe wurden in den Beispielen verwendet: Glasfilamentgewebe 296 g/m² - Atlas, Finish FK 144 (Interglas 92626)
Bei dem in den erfindungsgemäßen Beispielen verwendeten Polyol handelt es sich um Polyol 4290 der Firma Perstorp. Dieses Polyol ist tetrafunktionel, hat eine Hydroxylzahl von 290 ± 20 mg KOH / g und ein Molekulargewicht von ca. 800 g/mol.

### Herstellung des uretdionhaltigen Härters H:

119,1 g IPDI-Uretdion (Evonik Degussa GmbH) wurden in 100 ml Methylmethacrylat gelöst und mit 27,5 g Methylpentandiol und 3,5 g Trimethylolpropan versetzt. Nach Zugabe von 0,01 g Dibutylzinndilaurat wurde 4 h unter Rühren auf 80 °C geheizt. Danach waren titrimetrisch keine freien NCO-Gruppen mehr zu detektieren. Der Härter H besitzt einen effektiven NCO-Latentgehalt von 12,8 Gew.-% (bezogen auf Feststoff).

### Reaktive Polyurethanzusammensetzung

Es wurden reaktive Polyurethanzusammensetzungen mit den folgenden Rezepturen zur Herstellung der Prepregs und der Composite verwendet (siehe Tabellen).

### Vergleichsbeispiel 1 (entspricht der Lehre aus EP 2 661 459)

**Tabelle 1**

| Komponente | Funktion | Anteil (Gew%) | Hersteller |
|---|---|---|---|
| Härter H (60%-ig in MMA) (NCO-effektiv: 7,7%) | uretdiongruppenhaltige Härterkomponente a) | 53,3 | |
| Hydroxypropylacrylat | OH-haltiges Monomer | 14,0 | Evonik Industries AG |
| Laminierharz C | Methacrylat-Harz | 8,2 | Evonik Industries AG |
| Methylmethacrylat (MMA) | Monomer | 22,7 | Evonik Industries AG |
| Dibenzoylperoxid | Initiator | 0,9 | Fluka |
| N,N-bis-(2-Hydroxyethyl)-p-toluidin | Beschleuniger | 0,9 | Aldrich |

Die Einsatzstoffe aus Tabelle 1 wurden in einem Vormischer vermischt und dabei eine Lösung der festen Bestandteile in den Monomeren gebildet. Diese Mischung kann innerhalb von etwa 2 bis 3 h verwendet werden, bevor sie geliert.
Zur Herstellung des Prepregs wurde das Glasfasergewebe mit der Lösung der Matrixmaterialien getränkt. Die Prepregs wurden im Ofen 30 min bei Temperaturen von 60 °C bis zur Gewichtskonstanz getrocknet. Der Fasermassenanteil betrug 47 Gew%. Die imprägnierten Glasfasermatten wurden 1 h bei 180°C und 50 bar verpresst (Presse: Polystat 200 T der Firma Schwabenthan) und dabei vollständig vernetzt. Die harten, steifen, chemikalienbeständigen und schlagzähen Composite-Bauteile (Plattenware) wiesen einen T_{g} von 119°C auf.

### Vergleichsbeispiel 2 (entspricht der Lehre aus PCT/EP2014/053705)

**Tabelle 2**

| Komponente | Funktion | Anteil (Gew%) | Hersteller |
|---|---|---|---|
| Härter H (60%-ig in MMA) (NCO-effektiv: 7,7%) | uretdiongruppenhaltige Härterkomponente a) | 53,3 | |
| Hydroxypropylacrylat | OH-haltiges Monomer | 14,0 | Evonik Industries AG |
| Laminierharz C | Methacrylat-Harz | 8,2 | Evonik Industries AG |
| Methylmethacrylat (MMA) | Monomer | 22,7 | Evonik Industries AG |
| Irgacure 819 | Photoinitiator | 1,8 | Ciba |

Die Einsatzstoffe aus Tabelle 2 wurden in einem Vormischer vermischt und dabei eine Lösung der festen Bestandteile in den Monomeren gebildet. Diese Mischung kann etwa 1 bis 2 Jahre ohne Gelierung aufbewahrt werden.
Zur Herstellung des Prepregs wurde das Glasfasergewebe mit der Lösung der Matrixmaterialien getränkt. Die Prepregs wurden mit einer UV-LED Lampe (Heraeus NobleCure® basierend auf wassergekühlter Wärmesenke Wellenlänge: 395±5nm, Leistungsdichte: 8W/cm² in 5mm Arbeitsabstand Emissionsfenster: 251 x 35mm²) mit 1,5 m/min bestrahlt und dabei getrocknet. Der Fasermassenanteil betrug 54 Gew%. Die imprägnierten Glasfasermatten wurden 1 h bei 180°C und 50 bar verpresst (Presse: Polystat 200 T der Firma Schwabenthan) und dabei vollständig vernetzt. Die harten, steifen, chemikalienbeständigen und schlagzähen Composite-Bauteile (Plattenware) wiesen einen Tg von 123 °C auf.

### Vergleichsbeispiel 3 (entspricht der Lehre aus PCT/EP2014/053705)

**Tabelle 3**

| Komponente | Funktion | Anteil (Gew%) | Hersteller |
|---|---|---|---|
| Härter H (60%-ig in MMA) (NCO-effektiv: 7,7%) | uretdiongruppenhaltige Härterkomponente a) | 63,0 | |
| Hydroxypropylacrylat | OH-haltiges Monomer | 14,0 | Evonik Industries AG |
| Isobornylmethacrylat | Monomer | 21,0 | Evonik Industries AG |
| Irgacure 819 | Photoinitiator | 2,0 | Ciba |

Die Einsatzstoffe aus Tabelle 3 wurden in einem Vormischer vermischt und dabei eine Lösung der festen Bestandteile in den Monomeren gebildet. Diese Mischung kann mindestens 1 bis 2 Tage ohne Gelierung aufbewahrt werden. Zur Herstellung des Prepregs wurde das Glasfasergewebe mit der Lösung der Matrixmaterialien getränkt. Die Prepregs wurden mit einer UV-LED Lampe (Heraeus NobleCure® basierend auf wassergekühlter Wärmesenke Wellenlänge: 395±5nm, Leistungsdichte: 8W/cm² in 5mm Arbeitsabstand Emissionsfenster: 251 x 35mm²) mit 1,5 m/min bestrahlt und dabei getrocknet. Der Fasermassenanteil betrug 50 Gew%. Die imprägnierten Glasfasermatten wurden 1 h bei 170°C und 15 bar verpresst (Presse: Polystat 200 T der Firma Schwabenthan) und dabei vollständig vernetzt. Die harten, steifen, chemikalienbeständigen und schlagzähen Composite-Bauteile (Plattenware) wiesen einen Tg von 98 °C auf. Interlaminare Scherfestigkeit des Laminates lag bei 15 MPa.

### Beispiel 1

**Tabelle 4**

| Komponente | Funktion | Anteil (Gew%) | Hersteller |
|---|---|---|---|
| Härter H (60%-ig in MMA) (NCO-effektiv: 7,9%) | uretdiongruppenhaltige Härterkomponente a) | 74,0 | |
| Hydroxypropylmethacrylat | OH-haltiges Monomer | 11,0 | Evonik Industries AG |
| Polyol 4290 | Polyol | 13,0 | Perstop |
| Dibenzoylperoxid | Initiator | 2,0 | Fluka |

Die Einsatzstoffe aus Tabelle 4 wurden in einem Vormischer vermischt und dabei eine Lösung der festen Bestandteile in den Monomeren gebildet. Diese Mischung kann innerhalb von etwa 24 Stunden verwendet werden, bevor sie geliert.
Zur Herstellung des Prepregs wurde das Glasfasergewebe mit der Lösung der Matrixmaterialien getränkt und anschließend in einem Folien-Sandwich zusammen aufgewickelt. Durch die Folienzufuhr wurde ein Luftkontakt zur Matrix verhindert. Dabei ergeben sich diesbezüglich jedoch nur geringe Unterschiede zu den Vergleichsversuchen. Entsprechende Durchführung der Vergleichsversuche ergab Produkte mit einem etwas geringeren Faseranteil und einer tendenziell um wenige Grad Celsius erhöhte Glasübergangstemperatur des Matrixmaterials.

Die Prepregs mit der Folie wurden im Ofen 60 min bei einer Temperatur von 60 °C polymerisiert. Der Fasermassenanteil wurde im Beispiel 1 zu 40 % bestimmt. Die imprägnierten Glasfasermatten wurden 1 h bei 170°C und 15 bar verpresst (Presse: Polystat 200 T der Firma Schwabenthan) und dabei vollständig vernetzt. Die harten, steifen, chemikalienbeständigen und schlagzähen Composite-Bauteile (Plattenware) wiesen einen Tg von 105 °C auf. Interlaminare Scherfestigkeit des Laminates lag bei 71 MPa.

### Beispiel 2

**Tabelle 5**

| Komponente | Funktion | Anteil (Gew%) | Hersteller |
|---|---|---|---|
| Härter H (60%-ig in MMA) (NCO-effektiv: 7,9%) | uretdiongruppenhaltige Härterkomponente a) | 74,0 | |
| Hydroxypropylmethacrylat | OH-haltiges Monomer | 11,0 | Evonik Industries AG |
| Polyol 4290 | Polyol | 13,0 | Perstop |
| Dibenzoylperoxid | Initiator | 1,0 | Fluka |
| Irgacure 819 | Photoinitiator | 1,0 | Ciba |

Die Einsatzstoffe aus der Tabelle 5 wurden in einem Vormischer vermischt und dabei eine Lösung der festen Bestandteile in den Monomeren gebildet. Diese Mischung kann unter Lichtausschluss bei Raumtemperatur mehrere Stunden verwendet werden, bevor sie geliert.
Zur Herstellung des Prepregs wurde das Glasfasergewebe mit der Lösung der Matrixmaterialien getränkt und anschließend in einem Folien-Sandwich zusammen aufgewickelt. Dann wurden die Prepregs mit der Folie mit einer UV-LED Lampe (Heraeus NobleCure® basierend auf wassergekühlter Wärmesenke, Wellenlänge: 395±5nm, Leistungsdichte: 8W/cm² in 5mm Arbeitsabstand; Emissionsfenster: 251 x 35mm²) mit 1,5 m/min bestrahlt und dabei getrocknet. Anschließend wurde in einem Ofen 30 min bei einer Temperatur von 60°C nachpolymerisiert. Der Fasermassenanteil wurde im Beispiel 2 mit einem Anteil von 40 Gew% bestimmt.

Die imprägnierten Glasfasermatten wurden 1 h bei 170°C und 15 bar verpresst und dabei vollständig vernetzt. Die harten, steifen, chemikalienbeständigen und schlagzähen Composite-Bauteile (Plattenware) wiesen einen Tg von 120°C auf.

Im Vergleich der Vergleichsbeispiele zu den erfindungsgemäßen Beispielen konnten folgende Verbesserungen erzielt werden:
1. Erniedrigung des Pressdruckes von 50 Pa ((Vergleichsbeispiele) auf 15 Pa in den erfindungsgemäßen Beispielen
2. Verbesserung der Interlaminaren Scherfestigkeit (ILSS) von 15 MPa in den Vergleichsbeispielen auf 71 in den erfindungsgemäßen Beispielen
3. Erzielen von höheren Glasübergangstemperaturen bei gleichzeitig geringeren Schmelzviskositäten.

## Patentansprüche

1. Verfahren zur Herstellung von Composite-Halbzeugen und deren Weiterverarbeitung zu Formteilen, **gekennzeichnet durch** folgende Verfahrensschritte
I. Herstellung einer reaktiven Zusammensetzung enthaltend eine Zusammensetzung,
II. direkte Imprägnierung eines faserförmigen Trägers mit der Zusammensetzung aus I.,
III. Aushärten der Harzkomponente in der Zusammensetzung mittels thermischer Initiierung, Redox-Initiierung eines 2K-Systems, elektromagnetischer Strahlung, Elektronenstrahlung oder einem Plasma,
IV. Formgebung zum späteren Formteil und
V. Aushärten der Isocyanatkomponente in der Zusammensetzung,
wobei die Zusammensetzung im Wesentlichen aus folgenden Komponenten besteht:
A) einer reaktiven Harzkomponente auf (Meth)acrylatbasis, wobei mindestens ein Bestandteil der Harzkomponente Hydroxy-, Amin- und/oder Thiolgruppen aufweist,
B) mindestens einem intern blockierten und/oder mit Blockierungsmitteln blockierten Di- oder Polyisocyanat als Isocyanatkomponente und
C) eines oder mehrerer Polyole, bei denen es sich nicht um (Meth)acrylate oder Poly(meth)acrylate handelt.

2. Verfahren nach Anspruch 1, **dadurch gekennzeichnet, dass** die Zusammensetzung 25 bis 85 Gew% der Harzkomponente, 10 bis 60 Gew% der Isocyanatkomponente und 3 Gew% bis 40 Gew% eines oder mehrerer Polyole enthält.

3. Verfahren gemäß mindestens einem der Ansprüche 1 oder 2, **dadurch gekennzeichnet, dass** die Harzkomponente mindestens zusammengesetzt ist aus
0 Gew% bis 30 Gew% Vernetzer,
30 Gew% bis 100 Gew% Monomere,
0 Gew% bis 40 Gew% Poly(meth)acrylate, wobei die Monomere und/oder die Poly(meth)acrylate die Hydroxy-, Amin- und/oder Thiolgruppen aufweisen.

4. Verfahren gemäß mindestens einem der Ansprüche 1 oder 2, **dadurch gekennzeichnet, dass** die Harzkomponente mindestens zusammengesetzt ist aus
2 Gew% bis 10 Gew% Di- oder Tri(meth)acrylate,
40 Gew% bis 60 Gew% (Meth)acrylatmonomere,
0 Gew% bis 20 Gew% Urethan(meth)acrylate,
5 Gew% bis 30 Gew% Poly(meth)acrylate und
0 Gew% bis 10 Gew% Photoinitiator, Peroxid und/oder Azoinitiator, wobei die (Meth)acrylatonomere und/oder die Poly(meth)acrylate die Hydroxy-, Amin- und/oder Thiolgruppen aufweisen.

5. Verfahren gemäß mindestens einem der Ansprüche 1 bis 4, **dadurch gekennzeichnet, dass** die Zusammensetzung 10 Gew% bis 40 Gew% des Polyols enthält, und dass es sich bei dem Polyol um eine niedermolekulares Polyol mit 3 bis 6 OH-Funktionalitäten, um einen Polyester mit einem Molekulargewicht Mₙ zwischen 200 und 4000 g/mol, einer OH-Zahl zwischen 25 und 800 mg KOH/g und einer Säurezahl kleiner 2 mg KOH / g, einen Polyether mit einer OH-Zahl zwischen 25 und 1200 mg KOH / g und einer molaren Masse M_{w} zwischen 100 und 2000 g/mol oder um eine Mischung mindestens zweier dieser Polyole handelt.

6. Verfahren gemäß Anspruch 5, **dadurch gekennzeichnet, dass** es sich bei dem Polyester um ein Polycaprolacton mit einer OH-Zahl zwischen 25 und 540, einer Säurezahl zwischen 0,5 und 1 mg KOH / g und einer molaren Masse zwischen 240 und 2500 g/mol handelt.

7. Verfahren gemäß mindestens einem der Ansprüche 1 bis 6, **dadurch gekennzeichnet, dass** die faserförmigen Träger größtenteils aus Glas, Kohlenstoff, Kunststoffen, wie Polyamid (Aramid) oder Polyester, Naturfasern, oder mineralischen Fasermaterialien wie Basaltfasern oder keramische Fasern bestehen, und dass die faserförmigen Träger als textile Flächengebilde aus Vlies, Maschenware, Gewirke oder Gestricke, nicht maschige Gebinde wie Gewebe, Gelege oder Geflechte, als Langfaser- oder Kurzfasermaterialien vorliegen.

8. Verfahren gemäß mindestens einem der Ansprüche 1 bis 7, **dadurch gekennzeichnet, dass** Di- oder Polyisocyanate, ausgewählt aus Isophorondiisocyanat (IPDI), Hexamethylendiisocyanat (HDI), Diisocyanatodicyclohexylmethan (H12MDI), 2-Methylpentandiisocyanat (MPDI), 2,2,4-Trimethylhexamethylendiisocyanat/2,4,4-Trimethylhexamethylendiisocyanat (TMDI) und/oder Norbornandiisocyanat (NBDI), wobei auch die Isocyanurate einsetzbar sind, als Isocyanatkomponente eingesetzt werden, und dass diese Di- oder Polyisocyanate mit einem externen Blockierungsmittel, ausgewählt aus Acetessigsäureethylester, Diisopropylamin, Methylethylketoxim, Malonsäurediethylester, ε-Caprolactam, 1,2,4-Triazol, Phenol oder substituierte Phenole und/oder 3,5-Dimethylpyrazol, blockiert sind.

9. Verfahren gemäß mindestens einem der Ansprüche 1 bis 8, **dadurch gekennzeichnet, dass** die Isocyanatkomponente zusätzlich 0,01 bis 5,0 Gew% Katalysatoren enthält, bevorzugt Dibutylzinndilaurat, Zinkoctoat, Bismuthneodecanoat, und/oder tertiäre Amine, bevorzugt 1,4-Diazabicylco[2.2.2.]octan, in Mengen von 0,001 bis 1,0 Gew%.

10. Verfahren gemäß mindestens einem der Ansprüche 1 bis 7, **dadurch gekennzeichnet, dass** als Isocyanatkomponente Uretdione hergestellt aus Isophorondiisocyanat (IPDI), Hexamethylendiisocyanat (HDI), Diisocyanatodicyclohexylmethan (H12MDI), 2-Methylpentandiisocyanat (MPDI), 2,2,4-Trimethylhexamethylendiisocyanat/2,4,4-Trimethylhexamethylendiisocyanat (TMDI) und/oder Norbornandiisocyanat (NBDI), eingesetzt werden.

11. Verfahren gemäß Anspruch 10, **dadurch gekennzeichnet, dass** die Isocyanatkomponente unterhalb von 40 °C in fester Form und oberhalb von 125 °C in flüssiger Form vorliegt, einen freien NCO-Gehalt von kleiner 5 Gew% und einen Uretdiongehalt von 3 bis 50 Gew% aufweist, und dass die Isocyanatkomponente zusätzlich 0,01 bis 5 Gew% mindestens eines Katalysators ausgewählt aus quarternären Ammoniumsalzen und/oder quarternären Phosphoniumsalzen mit Halogenen, Hydroxiden, Alkoholaten oder organischen oder anorganischen Säureanionen als Gegenion enthält.

12. Verfahren gemäß einem der Ansprüche 10 oder 11, **dadurch gekennzeichnet, dass** die Isocyanatkomponente zusätzlich 0,1 bis 5 Gew% mindestens einen Co-Katalysators, ausgewählt aus entweder mindestens einem Epoxid und/oder mindestens einem Metallacetylacetonat und/oder quarternären Ammoniumacetylacetonat und/oder quarternären Phosphoniumacetylacetonat, und gegebenenfalls aus der Polyurethanchemie bekannte Hilfs- und Zusatzstoffe enthält.

13. Verfahren gemäß mindestens einem der Ansprüche 1 bis 12, **dadurch gekennzeichnet, dass** die Harzkomponente, die Polyole und die Isocyanatkomponente in einem solchen Verhältnis zueinander vorliegen, dass auf jede Hydroxylgruppe der Harzkomponente und des Polyols 0,3 bis 1,0, bevorzugt 0,4 bis 0,8, besonders bevorzugt 0,45 bis 0,55 Uretdiongruppen entfallen.

14. Verfahren gemäß mindestens einem der Ansprüche 1 bis 13, **dadurch gekennzeichnet, dass** die Aushärtung der Isocyanatkomponente in Verfahrensschritt V. bei einer Temperatur zwischen 80 und 200 °C, bevorzugt bei einer Temperatur zwischen 120 und 180 °C, durchgeführt wird.

15. Formteile, hergestellt aus einem Composite-Halbzeug gemäß mindestens einem der Ansprüche 1 bis 14, aufgebaut aus mindestens einem Faser förmigen Träger und mindestens einer vernetzten Reaktivzusammensetzung, bevorzugt einer vernetzten Uretdiongruppen haltigen Reaktivzusammensetzung, enthaltend ein ausgehärtetes (Meth)acrylatharz, als Matrix.

16. Verwendung von Formteilen gemäß Anspruch 15 im Boots- und Schiffbau, in der Luft- und Raumfahrtechnik, im Automobilbau, für Zweiräder bevorzugt Motorräder und Fahrräder, in den Bereichen Automotive, Construction, Medizintechnik, Sport, Elektro- und Elektronik-Industrie, Energieerzeugungsanlagen, wie für Rotorblätter bei Windkraftanlagen.

## Claims

1. Process for producing semi-finished composites and further processing thereof to give mouldings, **characterized by** the following process steps:
I. producing a reactive composition comprising a composition,
II. directly impregnating a fibrous carrier with the composition from I.,
III. curing the resin component in the composition by means of thermal initiation, redox initiation of a two-component system, electromagnetic radiation, electron beams or a plasma,
IV. shaping to give the later moulding and
V. curing the isocyanate component in the composition,
where the composition consists essentially of the following components:
A) a reactive (meth)acrylate-based resin component, where at least one constituent of the resin component has hydroxyl, amine and/or thiol groups,
B) at least one di- or polyisocyanate which has been internally blocked and/or blocked with blocking agents as isocyanate component and
C) one or more polyols which are not (meth)acrylates or poly(meth)acrylates.

2. Process according to Claim 1, **characterized in that** the composition contains 25% to 85% by weight of the resin component, 10% to 60% by weight of the isocyanate component and 3% by weight to 40% by weight of one or more polyols.

3. Process according to at least one of Claims 1 and 2, **characterized in that** the resin component is composed at least of
0% by weight to 30% by weight of crosslinker,
30% by weight to 100% by weight of monomers,
0% by weight to 40% by weight of poly(meth)acrylates, wherein the monomers and/or the poly(meth)acrylates have the hydroxyl, amine and/or thiol groups.

4. Process according to at least one of Claims 1 and 2, **characterized in that** the resin component is composed at least of
2% by weight to 10% by weight of di- or tri(meth)acrylates,
40% by weight to 60% by weight of (meth)acrylate monomers,
0% by weight to 20% by weight of urethane (meth)acrylates,
5% by weight to 30% by weight of poly(meth)acrylates and
0% by weight to 10% by weight of photoinitiator, peroxide and/or azo initiator, wherein the (meth)acrylate monomers and/or the poly(meth)acrylates have the hydroxyl, amine and/or thiol groups.

5. Process according to at least one of Claims 1 to 4, **characterized in that** the composition contains 10% by weight to 40% by weight of the polyol, and **in that** the polyol is a low molecular weight polyol having 3 to 6 OH functionalities, a polyester having a molecular weight Mₙ between 200 and 4000 g/mol, an OH number between 25 and 800 mg KOH/g and an acid number less than 2 mg KOH/g, a polyether having an OH number between 25 and 1200 mg KOH/g and a molar mass M_{w} between 100 and 2000 g/mol, or a mixture of at least two of these polyols.

6. Process according to Claim 5, **characterized in that** the polyester is a polycaprolactone having an OH number between 25 and 540, an acid number between 0.5 and 1 mg KOH/g and a molar mass between 240 and 2500 g/mol.

7. Process according to at least one of Claims 1 to 6, **characterized in that** the fibrous carriers consist for the most part of glass, carbon, polymers such as polyamide (aramid) or polyesters, natural fibres, or mineral fibre materials such as basalt fibres or ceramic fibres, and **in that** the fibrous carriers take the form of sheetlike textile structures made from nonwoven fabric, of knitted fabric including loop-formed and loop-drawn knits, of non-knitted structures such as woven fabrics, laid scrims or braids, or of long-fibre or short-fibre materials.

8. Process according to at least one of Claims 1 to 7, **characterized in that** di- or polyisocyanates selected from isophorone diisocyanate (IPDI), hexamethylene diisocyanate (HDI), diisocyanatodicyclohexylmethane (H12MDI), 2-methylpentane diisocyanate (MPDI), 2,2,4-trimethylhexamethylene diisocyanate/2,4,4-trimethylhexamethylene diisocyanate (TMDI) and/or norbornane diisocyanate (NBDI), including the isocyanurates, are used as isocyanate component, and **in that** these di- or polyisocyanates have been blocked with an external blocking agent selected from ethyl acetoacetate, diisopropylamine, methyl ethyl ketoxime, diethyl malonate, ε-caprolactam, 1,2,4-triazole, phenol or substituted phenols and/or 3,5-dimethylpyrazole.

9. Process according to at least one of Claims 1 to 8, **characterized in that** the isocyanate component additionally contains 0.01% to 5.0% by weight of catalysts, preferably dibutyltin dilaurate, zinc octoate, bismuth neodecanoate and/or tertiary amines, preferably 1,4-diazabicyclo[2.2.2]octane, in amounts of 0.001% to 1.0% by weight.

10. Process according to at least one of Claims 1 to 7, **characterized in that** the isocyanate components used are uretdiones prepared from isophorone diisocyanate (IPDI), hexamethylene diisocyanate (HDI), diisocyanatodicyclohexylmethane (H12MDI), 2-methylpentane diisocyanate (MPDI), 2,2,4-trimethylhexamethylene diisocyanate/2,4,4-trimethylhexamethylene diisocyanate (TMDI) and/or norbornane diisocyanate (NBDI).

11. Process according to Claim 10, **characterized in that** the isocyanate component is in solid form below 40°C and in liquid form above 125°C, has a free NCO content of less than 5% by weight and a uretdione content of 3% to 50% by weight, and **in that** the isocyanate component additionally contains 0.01% to 5% by weight of at least one catalyst selected from quaternary ammonium salts and/or quaternary phosphonium salts with halogens, hydroxides, alkoxides or organic or inorganic acid anions as counterion.

12. Process according to either of Claims 10 and 11, **characterized in that** the isocyanate component additionally contains 0.1% to 5% by weight of at least one cocatalyst selected from either
at least one epoxide and/or at least one metal acetylacetonate and/or quaternary ammonium acetylacetonate and/or quaternary phosphonium acetylacetonate, and optionally auxiliaries and additives known from polyurethane chemistry.

13. Process according to at least one of Claims 1 to 12, **characterized in that** the resin component, the polyols and the isocyanate component are present in such a ratio to one another that there is 0.3 to 1.0, preferably 0.4 to 0.8, more preferably 0.45 to 0.55, uretdione group for every hydroxyl group in the resin component and the polyol.

14. Process according to at least one of Claims 1 to 13, **characterized in that** the curing of the isocyanate component in process step V. is conducted at a temperature between 80 and 200°C, preferably at a temperature between 120 and 180°C.

15. Mouldings produced from a semi-finished composite according to at least one of Claims 1 to 14, formed from at least one fibrous carrier and at least one crosslinked reactive composition, preferably a reactive composition containing crosslinked uretdione groups, containing a cured (meth)acrylate resin, as matrix.

16. Use of mouldings according to Claim 15 in boat- and shipbuilding, in aerospace technology, in automobile construction, for two-wheeled vehicles, preferably motorcycles and pedal cycles, in the automotive, construction, medical technology and sports sectors, the electrical and electronics industry, and in energy generation installations, such as for rotor blades in wind turbines.

## Revendications

1. Procédé de fabrication de semi-finis composites et leur transformation en pièces moulées, **caractérisé par** les étapes de procédé suivantes :
I. la fabrication d'une composition réactive contenant une composition,
II. l'imprégnation directe d'un support fibreux avec la composition de I.,
III. le durcissement du composant résine dans la composition par initiation thermique, initiation redox d'un système 2K, rayonnement électromagnétique, faisceau d'électrons ou plasma,
IV. le façonnage en la pièce moulée ultérieure et
V. le durcissement du composant isocyanate dans la composition,
la composition étant essentiellement constituée par les composants suivants :
A) un composant résine réactif à base de (méth)acrylate, au moins un constituant du composant résine comprenant des groupes hydroxy, amine et/ou thiol,
B) au moins di- ou polyisocyanate bloqué en interne et/ou bloqué avec des agents de blocage en tant que composant isocyanate, et
C) un ou plusieurs polyols, qui ne sont pas des (méth)acrylates ou des poly(méth)acrylates.

2. Procédé selon la revendication 1, **caractérisé en ce que** la composition contient 25 à 85 % en poids du composant résine, 10 à 60 % en poids du composant isocyanate et 3 % en poids à 40 % en poids d'un ou de plusieurs polyols.

3. Procédé selon au moins l'une quelconque des revendications 1 ou 2, **caractérisé en ce que** le composant résine est au moins composé par :
0 % en poids à 30 % en poids d'agents de réticulation, 30 % en poids à 100 % en poids de monomères,
0 % en poids à 40 % en poids de poly(méth)acrylates, les monomères et/ou les poly(méth)acrylates comprenant les groupes hydroxy, amine et/ou thiol.

4. Procédé selon au moins l'une quelconque des revendications 1 ou 2, **caractérisé en ce que** le composant résine est au moins composé par :
2 % en poids à 10 % en poids de di- ou tri(méth)acrylates, 40 % en poids à 60 % en poids de monomères de (méth)acrylate,
0 % en poids à 20 % en poids de (méth)acrylates d'uréthane,
5 % en poids à 30 % en poids de poly(méth)acrylates et 0 % en poids à 10 % en poids d'un photoinitiateur, d'un peroxyde et/ou d'un initiateur azo, les monomères de (méth)acrylate et/ou les poly(méth)acrylates comprenant les groupes hydroxy, amine et/ou thiol.

5. Procédé selon au moins l'une quelconque des revendications 1 à 4, **caractérisé en ce que** la composition contient 10 % en poids à 40 % en poids du polyol, et **en ce que** le polyol est un polyol de faible poids moléculaire contenant 3 à 6 fonctionnalités OH, un polyester ayant un poids moléculaire Mₙ compris entre 200 et 4 000 g/mol, un indice OH compris entre 25 et 800 mg KOH/g et un indice d'acidité inférieur à 2 mg KOH/g, un polyéther ayant un indice OH compris entre 25 et 1 200 mg KOH/g et une masse molaire M_{w} comprise entre 100 et 2 000 g/mol ou un mélange d'au moins deux de ces polyols.

6. Procédé selon la revendication 5, **caractérisé en ce que** le polyester est une polycaprolactone ayant un indice OH compris entre 25 et 540, un indice d'acidité compris entre 0,5 et 1 mg KOH/g et une masse molaire comprise entre 240 et 2 500 g/mol.

7. Procédé selon au moins l'une quelconque des revendications 1 à 6, **caractérisé en ce que** les supports fibreux sont constitués en majeure partie de verre, de carbone, de plastiques, tels que le polyamide (aramide) ou le polyester, de fibres naturelles ou de matériaux fibreux minéraux tels que des fibres de basalte ou des fibres céramiques, et **en ce que** les supports fibreux se présentent sous la forme de structures textiles plates en non-tissés, tissus à mailles, tricots, assemblages sans mailles tels que des tissus, des nappes ou des treillis, sous la forme de matériaux à fibres longues ou à fibres courtes.

8. Procédé selon au moins l'une quelconque des revendications 1 à 7, **caractérisé en ce que** des di- ou polyisocyanates choisis parmi le diisocyanate d'isophorone (IPDI), le diisocyanate d'hexaméthylène (HDI), le diisocyanatodicyclohexylméthane (H12MDI), le diisocyanate de 2-méthylpentane (MPDI), le diisocyanate de 2,2,4-triméthylhexaméthylène/diisocyanate de 2,4,4-triméthylhexaméthylène (TMDI) et/ou le diisocyanate de norbornane (NBDI) sont utilisés en tant que composant isocyanate, les isocyanurates étant également utilisables, et **en ce que** ces di- ou polyisocyanates sont bloqués avec un agent de blocage externe, choisi parmi l'ester éthylique de l'acide acétoacétique, la diisopropylamine, le méthyléthylcétoxime, l'ester diéthylique de l'acide malonique, l'ε-caprolactame, le 1,2,4-triazole, le phénol ou des phénols substitués et/ou le 3,5-diméthylpyrazole.

9. Procédé selon au moins l'une quelconque des revendications 1 à 8, **caractérisé en ce que** le composant isocyanate contient en outre 0,01 à 5,0 % en poids de catalyseurs, de préférence le dilaurate de dibutylétain, l'octoate de zinc, le néodécanoate de bismuth et/ou des amines tertiaires, de préférence le 1,4-diazabicyclo[2.2.2]octane, en quantités de 0,001 à 1,0 % en poids.

10. Procédé selon au moins l'une quelconque des revendications 1 à 7, **caractérisé en ce que** des uretdiones fabriquées à partir de diisocyanate d'isophorone (IPDI), de diisocyanate d'hexaméthylène (HDI), de diisocyanatodicyclohexylméthane (H12MDI), de diisocyanate de 2-méthylpentane (MPDI), de diisocyanate de 2,2,4-triméthylhexaméthylène/diisocyanate de 2,4,4-triméthylhexaméthylène (TMDI) et/ou de diisocyanate de norbornane (NBDI) sont utilisées en tant que composant isocyanate.

11. Procédé selon la revendication 10, **caractérisé en ce que** le composant isocyanate se présente en dessous de 40 °C sous forme solide et au-dessus de 125 °C sous forme liquide, présente une teneur en NCO libre inférieure à 5 % en poids et une teneur en uretdione de 3 à 50 % en poids, et **en ce que** le composant isocyanate contient en outre 0,01 à 5 % en poids d'au moins un catalyseur choisi parmi les sels d'ammonium quaternaires et/ou les sels de phosphonium quaternaires avec des halogènes, des hydroxydes, des alcoolates ou des anions acides organiques ou inorganiques en tant que contre-ion.

12. Procédé selon l'une quelconque des revendications 10 ou 11, **caractérisé en ce que** le composant isocyanate contient en outre 0,1 à 5 % en poids d'au moins un co-catalyseur, choisi parmi au moins un époxyde et/ou au moins un acétylacétonate de métal et/ou un acétylacétonate d'ammonium quaternaire et/ou un acétylacétonate de phosphonium quaternaire, et éventuellement des adjuvants et additifs connus dans la chimie des polyuréthanes.

13. Procédé selon au moins l'une quelconque des revendications 1 à 12, **caractérisé en ce que** le composant résine, les polyols et le composant isocyanate sont présents en un rapport les uns par rapport aux autres tel que, pour chaque groupe hydroxyle du composant résine et du polyol, 0,3 à 1,0, de préférence 0,4 à 0,8, de manière particulièrement préférée 0,45 à 0,55 groupe uretdione soit présent.

14. Procédé selon au moins l'une quelconque des revendications 1 à 13, **caractérisé en ce que** le durcissement du composant isocyanate à l'étape de procédé V. est réalisé à une température comprise entre 80 et 200 °C, de préférence à une température comprise entre 120 et 180 °C.

15. Pièces moulées, fabriquées à partir d'un semi-fini composite selon au moins l'une quelconque des revendications 1 à 14, formé par au moins un support fibreux et au moins une composition réactive réticulée, de préférence une composition réactive réticulée contenant des groupes uretdione, contenant une résine de (méth)acrylate durcie en tant que matrice.

16. Utilisation de pièces moulées selon la revendication 15 dans la construction de bateaux et de navires, dans la technologie aéronautique et aérospatiale, dans la construction d'automobiles, pour les deux-roues, de préférence les motocycles et les bicyclettes, dans les domaines de l'automobile, du bâtiment, des techniques médicales, du sport, dans l'industrie électrique et électronique, dans les installations de génération d'énergie, par exemple pour les pales de rotor d'éoliennes.
